# EUROPÄISCHE PATENTSCHRIFT

(11) **EP 2 774 828 B1**
(45) Veröffentlichungstag und Bekanntmachung des Hinweises auf die Patenterteilung: **14.09.2016**
(21) Anmeldenummer: 14000546.3
(22) Anmeldetag: 15.02.2014
(51) Int. Cl.: B62D 13/06, B60T 8/1755, B60T 8/17, B62D 15/02

(54) **Verfahren, Steuersystem und Bremssystem zur Steuerung des Rückwärtsrangierens eines Gespannfahrzeugs**
Method, control system and brake system for controlling the backward manoeuvring of a trailer vehicle
Procédé, système de commande et système de freinage pour la commande de la maneuvre en marche arrière d'un véhicule attelé

(30) Priorität: 06.03.2013 DE 102013003853
(43) Veröffentlichungstag der Anmeldung: 10.09.2014
(73) Patentinhaber: WABCO GmbH, 30453 Hannover (DE)
(72) Erfinder: Dieckmann, Thomas, 30982 Pattensen (DE); Zielke, Frank, 30890 Barsinghausen (DE)

(56) Entgegenhaltungen:
- DE-A1- 19 953 413
- DE-A1-102005 043 466
- DE-A1-102005 045 196
- DE-A1-102009 039 111
- DE-A1-102010 008 324
- US-A1- 2012 029 782

## Beschreibung

Die. Erfindung betrifft ein Verfahren zur Steuerung des Rückwärtsrangierens eines Gespannfahrzeugs, ein Steuersystem zur Durchführung des Verfahrens und ein elektronisches Bremssystem zur Steuerung des Rückwärtsrangierens eines mit einem Zugfahrzeug gelenkig gekoppelten Anhängers.

In der DE 10 2005 043 466 A1 ist ein Rückfahrhilfesystem zur Unterstützung des Fahrers eines Zugfahrzeug-Anhänger-Gespanns bei einer Rückwärtsfahrt offenbart, das eine Eingabeeinrichtung zur Eingabe einer den Fahrkurs des Gespanns bestimmenden Fahrervorgabe, eine Detektionseinrichtung zur Erfassung einer die relative Position des Anhängers bezüglich des Zugfahrzeugs beschreibenden Anhänger-Zugfahrzeug-Winkellage, eine Berechnungseinrichtung zur Umsetzung der Fahrervorgabe in einen Lenksteuerbefehl für einen automatischen Lenkeingriff und zur vorausschauenden Berechnung einer aus der Fahrervorgabe resultierenden Bewegungsbahn des Gespanns sowie zur vorausschauenden Berechnung einer Bewegungsbahn des Anhängers, entlang welcher der Anhänger bei Beibehaltung der aktuellen Anhänger-Zugfahrzeug-Winkellage voraussichtlich bewegt werden wird, und ferner eine Bildanzeigeeinrichtung zur Anzeige eines Bildes mit den berechneten Bewegungsbahnen des Gespanns umfasst.

Am Anhänger ist bei diesem bekannten Rückfahrhilfesystem eine Kamera zur Überwachung der rückseitigen Anhängerumgebung angeordnet, und die Bildanzeigeeinrichtung ist dazu eingerichtet, ein von dieser Kamera aktuell aufgenommenes Bild anzuzeigen sowie die berechneten Bewegungsbahnen des Gespanns in dieses Bild einzublenden. Die Berechnungseinrichtung ist dazu eingerichtet, die Fahrvorgabe hinsichtlich ihrer Realisierbarkeit zu beurteilen und diese Fahrervorgabe zu korrigieren oder einen Anhaltebefehl für einen Bremseingriff zu generieren, um das Gespann zum Stehen zu bringen, falls die Beurteilung der Fahrervorgabe ergibt, dass diese nicht realisierbar ist. Die Eingäbeeinrichtung umfasst einen Stellhebel, über den der Fahrer eine gewünschte, fahrstreckenbezogene oder zeitbezogene Änderung eines Anhängerlenkwinkeln als Fahrervorgabe vorgibt. Die Lenkung des Anhängers entlang den berechneten Bewegungsbahnen erfolgt ausschließlich durch eine automatische Lenkung der Räder der lenkbaren Achse des Zugfahrzeugs.

Ein automatisches Lenksystem und ein Lenkverfahren für das Rückwärtsrangieren eines Gespannfahrzeugs bestehend aus einem Zugfahrzeug sowie einem einachsigen Anhänger sind des Weiteren aus DE 199 53 413 A1 bekannt. Bei diesen wird eine Rückwärtsfahrt des Gespannfahrzeugs mittels geeigneter Sensoren oder durch die Auswertung vorhandener Steuersignale erfasst, und es wird abhängig davon die Bremse des einachsigen Anhängers auf derjenigen Anhängerseite betätigt, in deren Richtung sich der einachsige Anhänger bewegen soll. Die Betätigung der Bremsen des einachsigen Anhängers wird mittels eines im Gespannfahrzeug, beispielsweise im Anhänger, implementiertes Steuerungsgerät vorgenommen, das ein bestimmtes Steuerungssignal generiert, mit dem der Bremsdruck in den Bremszylindern der Bremsen des einachsigen Anhängers angesteuert wird. Zur Erzeugung des Steuerungssignals werden dem Steuerungsgerät die von den Sensoren des Gespannfahrzeugs gelieferten Sensorsignale bezüglich des Lenkwinkels und des tatsächlichen Winkels des einachsigen Anhängers und/oder bezüglich der Geschwindigkeit des Zugfahrzeugs und/oder bezüglich der Drehbewegung um mindestens eine der Achsen des Zugfahrzeugs und/oder um die Achse des einachsigen Anhängers zugeführt, die dann vom Steuerungsgerät entsprechend verarbeitet und ausgewertet werden, so dass sich der einachsige Anhänger automatisch in die gewünschte Richtung bewegt.

Die DE 10 2009 039 111 A1 ist als nächstliegender Stand der Technik nach dem Oberbegriff des Anspruchs 1 zu sehen und betrifft ein Assistenzsystem zum automatisierten oder den Fahrer unterstützendem Rückwärtsfahren eines aus mindestens zwei gelenkig miteinander verbundenen Fahrzeugteilen bestehenden Fahrzeugverbandes, welcher mit einem GPS-basierten Navigationssystem und einem Informationsdisplay und einem Umgebungsvermessungssystem ausgestattet ist.

Vor diesem Hintergrund liegt der Erfindung die Aufgabe zugrunde, ein Verfahren und Mittel zur Steuerung des Rückwärtsrangierens eines Gespannfährzeugs vorzustellen, mittels derer sich ein Gespannfahrzeug bestehend aus einem Zugfahrzeug und einem Anhänger automatisch durch Lenkung sowohl des Zugfahrzeugs als auch des Anhängers entlang eines zielführenden Fahrschlauchs zu einem eingegebenen Zielort bewegen lässt.

Als Fahrschlauch wird eine prognostizierte und seitlich begrenzte Fahrstrecke bezeichnet, auf der ein Gespannfahrzeug bei einer Rückwärtsfahrt bewegt werden soll, ohne dabei die seitlichen Begrenzungen zu überschreiten. Der Fahrschlauch kann an dem Heck des Anhängers beginnen oder zu Beginn der Rückwärtsfahrt in Rückwärtsfahrtrichtung vor dem Heck des Anhängers anfangen. Das gegenüberliegende Ende des Fahrschlauchs markiert den Zielort, welcher am Ende der Rückwärtsfahrt erreicht werden soll.

Gelöst wird die gestellte Aufgabe durch ein Verfahren und ein Steuersystem zur Steuerung des Rückwärtsrangierens eines Gespannfahrzeugs sowie ein elektronisches Bremssystem zur Steuerung des Rückwärtsrangierens eines mit einem Zugfahrzeug gelenkig gekoppelten Anhängers mit den Merkmalen der unabhängigen Ansprüche 1, 8 und 20, während die zugeordneten Unteransprüche bevorzugte Ausführungsformen definieren.

Demnach besteht die Erfindung zunächst in einem Verfahren zur Steuerung des Rückwärtsrangierens eines Gespannfahrzeugs, bestehend aus einem Zugfahrzeug mit wenigstens einer automatisch lenkbaren Vorderachse und mit wenigstens einer ungelenkten Hinterachse sowie mit einem Anhänger, der zum automatischen Lenken desselben einseitig abbremsbaren Räder aufweist, mit wenigstens einer Rückfahrkamera im Heckbereich des Anhängers, mit einem durch eine Bedienungsperson bedienbaren Eingabe- und Anzeigegerät mit einem Bildschirm für das Kamerabild, und mit einer Regel- und Steuerelektronik, bei dem die Regel- und Steuerelektronik aus einem durch die Bedienungsperson in das Eingabe- und Anzeigegerät eingebbaren Zielort, aus Positionsdaten des Gespannfahrzeugs relativ zu dem Zielort, aus mittels Sensoren bestimmte Fahrzeugdaten, wie dem aktuellen Lenkwinkel der lenkbaren Vorderachse des Zugfahrzeugs, aus dem aktuellen Knickwinkel einer Deichsel des Anhängers relativ zum Zugfahrzeug und/oder aus dem aktuellen Knickwinkel des Anhängers zum Zugfahrzeug und/oder der Deichsel, einen zielführenden Fahrschlauch berechnet sowie zugehörige Graphikinformationen an das Eingabe- und Anzeigegerät überträgt, bei dem das von der Rückfahrkamera aufgenommene Bild an das Eingabe- und Anzeigegerät übertragen sowie dort dargestellt wird, bei dem das Eingabe- und Anzeigegerät auf seinem Bildschirm das Kamerabild derart durch das Bild des zielführenden Fahrschlauchs überlagert darstellt, dass das Bild des Fahrschlauchs und das Kamerabild gleichzeitig sichtbar sind, bei dem die Regel- und Steuerelektronik Steuerbefehle für einen Lenkaktuator an der lenkbaren Vorderachse des Zugfahrzeugs sowie Lenkbremsbefehle für die Bremsen an den Rädern des Anhängers berechnet, und bei dem die Regel- und Steuerelektronik eine Ansteuerung des Lenkaktuators und/oder der Bremsen der Räder des Anhängers derart durchführt und/oder auslöst, dass das Gespannfahrzeug beim Rückwärtsrangieren automatisch im Fahrschlauch zum eingegebenen Zielort fährt.

Die Bedienungsperson kann sich bei der Durchführung des Verfahrens im Fahrerhaus des Zugfahrzeugs befinden oder sich außerhalb des Gespannfahrzeugs aufhalten. Sie braucht nur das Rückwärtsrangieren durch Eingeben entsprechender Befehle in das Eingabe- und Anzeigegerät einzuleiten, worauf das Rückwärtsrangieren des Gespannfahrzeugs bis zum Zielort entlang dem zielführenden Fahrschlauch automatisch erfolgt.

Das Zugfahrzeug des Gespannfahrzeugs kann ein Personenfahrzeug, ein Kleintransporter oder ein Lastkraftwagen sein. Der Anhänger des Gespannfahrzeugs kann wenigstens eine mittels einer Deichsel mit dem Zugfahrzeug gekoppelte gelenkte Achse und wenigstens eine ungelenkte Achse oder auch nur wenigstens eine ungelenkte Achse aufweisen.

Die Aktuatoren an den Radbremsen des Zugfahrzeugs und des Anhängers werden insbesondere bei einer Vorwärtsfahrt von der im Zugfahrzeug angeordneten Regelund Steuerelektronik angesteuert. Während einer Rückwärtsfahrt werden die Aktuatoren der Radbremsen des Anhängers jedoch von einem gesonderten, anhängerseitigen
elektronischen Bremssystem angesteuert, welches seine rangierbezogenen Steuerbefehle jedoch von der zugfahrzeugseitigen Regel- und Steuerelektronik direkt oder indirekt vorgegeben bekommt.

Falls Abweichungen des Fahrschlauchs vom Zielort während des Rückwärtsrangierens auftreten oder sich Änderungen des Zielorts ergeben, lässt sich der zielführende Fahrschlauch durch eine manuelle Eingabe in das Eingabe- und Anzeigegerät korrigieren, um das Gespannfahrzeug automatisch exakt zum Zielort zu dirigieren.

Zum Einleiten des Rückwärtsrangiervorgangs kann entweder ein entsprechender Befehl in das Eingabe- und Anzeigegerät eingegeben werden, oder es kann mit dem Einlegen des Rückwärtsgangs ein diesbezügliches Signal an das Eingabe- und Anzeigegerät sowie an die Regel- und Steuerelektronik ausgelöst werden.

Es lassen sich durch die Regel- und Steuerelektronik Bereiche auf dem Bildschirm des Eingabe- und Anzeigegeräts kennzeichnen beziehungsweise gesondert darstellen, die außerhalb des maximalen Lenkeinschlags des Gespannfahrzeugs liegen und somit aus der aktuellen Position des Gespannfahrzeugs nicht erreichbar sind.

Insbesondere kann die Regel- und Steuerelektronik aus den übermittelten Daten berechnen, ob der eingegebene Zielort aus der aktuellen Position des Gespannfahrzeugs erreichbar ist. Wenn dies nicht der Fall ist, kann die Regel- und Steuerelektronik eine Anzeige auf dem Bildschirm des Eingabe- und Anzeigegeräts generieren, aus der hervorgeht, ob und in welchem Umfang die Position des Gespannfahrzeugs zu verändern ist, um den eingegebenen Zielort automatisch anzufahren.

Weiter kann vorgesehen sein, dass zur Lenkung des Anhängers auf der Grundlage einer mit dem zielführenden Fahrschlauch berechneten Richtungsvorgabe von der Regel- und Steuerelektronik ermittelte Lenkbremsbefehle für die Bremse wenigstens eines Rades des Anhängers direkt oder über ein Steuergerät im Anhänger an ein elektronischen Bremssystem im Anhänger gesendet werden, und dass das elektronische Bremssystem des Anhängers die Bremse wenigstens eines Rades einer Seite wenigstens einer Achse des Anhängers derart abgebremst, dass beim Rückwärtsrangieren der Anhänger zusammen mit dem automatisch gelenkten Zugfahrzeug in dem Fahrschlauch bis zum Zielort fährt.

Zur Lenkung eines Anhängers ohne lenkbare Achsen lässt sich die Bremse wenigstens eines kurveninneren oder kurvenäußeren Rades wenigstens einer Achse des Anhängers so abbremsen, dass beim Rückwärtsrangieren der Anhänger zusammen mit dem automatisch gelenkten Zugfahrzeug in dem Fahrschlauch bis zum Zielort fährt.

Weiter kann bei dem Steuersystem vorgesehen sein, dass die Regel- und Steuerelektronik dazu eingerichtet ist, das anhängerseitige Steuergerät oder das elektronische Bremssystem eines Anhängers ohne lenkbare Achsen so anzusteuern, dass die Bremse wenigstens eines kurveninneren oder kurvenäußeren Rades wenigstens einer Achse des Anhängers derart abgebremst wird, dass beim Rückwärtsrangieren der Anhänger zusammen mit dem automatisch gelenkten Zugfahrzeug im Fahrschlauch bis zum Zielort fährt.

Zur Lenkung eines Anhängers mit wenigstens einer mittels einer Deichsel lenkbaren Vorderachse sowie wenigstens einer ungelenkten Hinterachse lässt sich die Bremse wenigstens eines kurvenäußeren oder kurveninneren Rades wenigstens einer der gelenkten Achsen des Anhängers und/oder die Bremse wenigstens eines kurveninneren oder kurvenäußeren Rades wenigstens einer der ungelenkten Hinterachsen so abbremsen, dass beim Rückwärtsrangieren der Anhänger zusammen mit dem automatisch gelenkten Zugfahrzeug in dem Fahrschlauch bis zum Zielort fährt.

Die gestellte Aufgabe wird des Weiteren durch ein Steuersystem zur Steuerung des Rückwärtsrangierens eines Gespannfahrzeugs gelöst, bestehend aus einem Zugfahrzeug mit wenigstens einer automatisch lenkbaren Vorderachse und mit wenigstens einer ungelenkten Hinterachse, sowie mit einem mit dem Zugfahrzeug gelenkig gekoppelten Anhänger mit zum automatischen Lenken desselben einseitig abbremsbaren Rädern, aufweisend wenigstens eine Rückfahrkamera im Heckbereich des Anhängers, ein durch eine Bedienungsperson bedienbares, einen Bildschirm aufweisendes Eingabe- und Anzeigegerät, und eine mit der Eingabe- und Anzeigegerät funktional verbundene Regel- und Steuerelektronik, wobei die Rückfahrkamera dazu eingerichtet ist, ein Kamerabild zum Eingabe- und Anzeigegerät zu übertragen, das Eingabe- und Anzeigegerät dazu eingerichtet ist, das Kamerabild auf dem Bildschirm abzubilden, durch die Bedienungsperson eingebbare Zielortdaten aufzunehmen und zur Regel- und Steuerelektronik zu übertragen, und die Regel- und Steuerelektronik dazu eingerichtet ist, aus Positionsdaten des Gespannfahrzeugs relativ zu dem in das Eingabe- und Anzeigegerät eingegebenen Zielort, sowie aus durch Sensoren bestimmten Fahrzeugdaten, wie dem aktuellen Lenkwinkel der lenkbaren Vorderachse des Zugfahrzeugs, dem aktuellen Knickwinkel einer Deichsel des Anhängers relativ zum Zugfahrzeug und/oder dem aktuellen Knickwinkel des Anhängers relativ zum Zugfahrzeug und/oder zur Deichsel, einen zielführenden Fahrschlauch zu berechnen sowie dessen Graphikinformationen zum Eingabe- und Anzeigegerät zu übertragen, bei dem das Eingabe- und Anzeigegerät dazu eingerichtet ist, ein Bild des zielführenden Fahrschlauchs dem Kamerabild auf dem Bildschirm maßstabgetreu so zu überlagern, dass das Bild des Fahrschlauchs und das Kamerabild gleichzeitig sichtbar sind, und bei dem die Regel- und Steuerelektronik dazu eingerichtet ist, die notwendigen Steuerbefehle für einen Lenkaktuator der lenkbaren Vorderachse des Zugfahrzeugs sowie die notwendigen Lenkbremsbefehle für die Bremsen an den Rädern des Anhängers zu berechnen sowie die Ansteuerung des Lenkaktuators sowie der Bremsen an den Rädern des Anhängers in der Weise durchzuführen, dass das Gespannfahrzeug beim Rückwärtsrangieren automatisch in dem Fahrschlauch bis zum eingegebenen Zielort fährt.

Des Weiteren kann das Eingabe- und Anzeigegerät dazu eingerichtet sein, Korrekturen am zielführenden Fahrschlauch durch manuelle Eingabe durch eine Bedienperson zu empfangen, beispielsweise wenn diese Bedienperson während des Rückwärtsrangierens auf dem Bildschirm Abweichungen des Fahrschlauchs vom eingegebenen Zielort erkennt oder wenn aus anderen Gründen Änderungen des Zielorts vorgenommen werden sollen.

Bei einer solchen Ausführungsform ist die Regel- und Steuerelektronik dazu eingerichtet, diese Korrekturen oder Änderungen in das Bild des Fahrschlauchs, in die Darstellung des Zielorts und in die daraus folgenden Ansteuerbefehle für den Lehkaktuator der lenkbaren Vorderachse des Zugfahrzeugs und für die Lenkbremsbefehle der Bremsen an den Rädern des Anhängers einzubeziehen, um das Gespannfahrzeug automatisch exakt zum Zielort zu dirigieren.

Das Steuersystem kann außerdem an einer Gangschaltvorrichtung des Getriebes des Zugfahrzeugs einen Gangschaltsensor aufweisen oder mit diesem über eine Datenbusleitung verbunden, der beim Einlegen des Rückwärtsgangs ein Signal an das Eingabe- und Anzeigegerät sowie ein Signal an die Regel- und Steuereiektronik zum Einleiten des Rückwärtsrangiervorgangs generiert.

Ferner ist bei dem Steuersystem gemäß der Erfindung vorgesehen, dass die Regel- und Steuerelektronik dazu eingerichtet sein, auf dem Bildschirm des Eingabe- und Anzeigegeräts solche Bereiche graphisch zu kennzeichnen, die außerhalb des maximalen Lenkeinschlags des Gespannfahrzeugs liegen und somit aus der aktuellen Position des Gespannfahrzeugs nicht erreichbar sind.

Weiter kann bei diesem Steuersystem die Regel- und Steuerelektronik dazu eingerichtet sein, aus den übermittelten Daten zu berechnen, ob der eingegebene Zielort aus der aktuellen Position des Gespannfahrzeugs erreichbar ist, und wenn dies nicht der Fall ist, eine Anzeige auf dem Bildschirm des Eingabe- und Anzeigegeräts zu generieren, aus der hervorgeht, ob und in welchem Umfang die Position des Gespannfahrzeugs zu verändern ist, um den eingegebenen Zielort automatisch anzufahren.

Außerdem kann das Steuersystem so ausgebildet sein, dass der an das Zugfahrzeug angekoppelte Anhänger ein elektronisches Bremssystem aufweist, welches direkt oder über ein anhängerseitiges Steuergerät von der zugfahrzeugseitigen Regel- und Steuerelektronik mit Lenkbremsbefehle für die Bremsen der Räder des Anhängers versorgbar ist, welche entsprechend einer mit dem zielführenden Fahrschlauch berechneten Richtungsvorgabe erzeugt wurden, und bei dem das elektronische Bremssystem derart eingerichtet ist, das mit diesem die Bremse wenigstens eines Rades einer Seite wenigstens einer Achse des Anhängers so abbremsbar ist, dass beim Rückwärtsrangieren der Anhänger zusammen mit dem automatisch gelenkten Zugfahrzeug im Fahrschlauch bis zum Zielort fährt.

Weiter kann bei diesem Steuersystem vorgesehen sein, dass die Regel- und Steuerelektronik dazu eingerichtet ist, das anhängerseitige Steuergerät oder das elektronische Bremssystem eines Anhängers ohne lenkbare Achsen so anzusteuern, dass die Bremse wenigstens eines kurveninneren oder kurvenäußeren Rades wenigstens einer Achse dieses Anhängers derart abgebremst wird, dass beim Rückwärtsrangieren der Anhänger zusammen mit dem automatisch gelenkten Zugfahrzeug im Fahrschlauch bis zum Zielort fährt.

Gemäß einer anderen Ausführungsform ist vorgesehen, dass die Regel- und Steuerelektronik dazu eingerichtet ist, das anhängerseitige Steuergerät oder das elektronische Bremssystems eines Anhängers mit wenigstens einer mittels einer Deichsel lenkbaren Vorderachse sowie mit wenigstens einer ungelenkten Hinterachse so anzusteuern, dass die Bremse wenigstens eines kurvenäußeren oder kurveninneren Rades wenigstens einer der gelenkten Achsen und/oder die Bremse wenigstens eines kurvenäußeren oder kurveninneren Rades wenigstens einer der ungelenkten Hinterachsen derart abgebremst werden, dass beim Rückwärtsrangieren der Anhänger zusammen mit dem automatisch gelenkten Zugfahrzeug im Fahrschlauch bis zum Zielort fährt.

Da das Rückwärtsrangieren des Gespannfahrzeug automatisch ohne Lenkeingriffe des Fahrzeugführers am Lenkrad des Zugfahrzeugs erfolgt, kann das Eingabe- und Anzeigegerät im Fahrerhaus des Zugfahrzeugs oder mobil ausgebildet sein. In beiden Fällen kann Eingabe- und Anzeigegerät über eine Leitung oder eine Funkstrecke (beispielsweise WLAN) mit der Regel- und Steuerelektronik funktional verbunden sein.

Das anhängerseitige Steuergerät kann in das elektronische Bremssystem des Anhängers gerätetechnisch integriert und/oder hinsichtlich seiner Steuerungs- und Regelungsabläufe (Software) in dieses implementiert sein. Die beschriebene Integration ist besonders dann vorteilhaft, wenn das elektronische Bremssystem des Anhängers ein elektronisches Radschlupfregelsystem umfasst. Unter einem elektronischen Radschlupfregelsystem ist ein Regelsystem zu verstehen, welches ein Antiblockiersystem sowie ein elektronisches Stabilisierungsprogramm umfasst und ein Blockieren der Räder des Anhängers beim Bremsen sowie ein Ausbrechen des Anhängers beim Bremsen und bei Kurvenfahrt verhindert.

Die Regel- und Steuerelektronik kann vorzugsweise als Zentral-Rechner-Einheit des Zugfahrzeugs konfiguriert sein, die ein elektronisches Bremsregelsystem aufweist und dazu eingerichtet ist, für das Rückwärtsrangieren des Gespannfahrzeugs eine Lenkstrategie für das Zugfahrzeug und eine Abbremsstrategie für den Anhänger zu berechnen, und die dazu eingerichtet ist, das Lenken der lenkbaren Vorderachse des Zugfahrzeugs sowie das Abbremsen einzelner Räder der wenigstens einen gelenkten Vorderachse und/oder einzelner Räder an der wenigstens einen ungelenkten Hinterachse in der Weise anzusteuern, dass das Gespannfahrzeug automatisch in dem Fahrschlauch bis zum eingegebenen Zielort fährt.

Das Eingabe- und Anzeigegerät ist vorzugsweise als Mobiltelefon oder als tragbarer, flacher Rechner ausgebildet, mit einem berührungsempfindlichen Bildschirm, mit einer Rechnerfunktionalität, mit einer satellitengestützten Navigationsfunktion, mit Internet-Anbindung und mit Anbindung an ein lokales Funknetz (WLAN).

Die eingangs erwähnte Aufgabe wird des Weiteren gelöst durch ein elektronisches Bremssystem zur Steuerung des Rückwärtsrangierens eines mit einem Zugfahrzeug gelenkig gekoppelten Anhängers, die zusammen ein Gespannfahrzeug bilden, wobei das Zugfahrzeug wenigstens eine automatisch lenkbare Vorderachse und wenigstens eine ungelenkte Hinterachse aufweist, sowie der Anhänger zum automatischen Lenken desselben einseitig abbremsbare Räder aufweist, und bei dem das elektronische Bremssystem des Anhängers zum Empfang von Lenkbremsbefehlen für abzubremsende Räder des Anhängers mit einer Regel- und Steuerelektronik des Zugfahrzeugs direkt oder über ein Steuergerät signaltechnisch verbunden ist, wobei des Weiteren im Heckbereich des Anhängers wenigstens eine Rückfahrkamera angeordnet ist, wobei die Regel- und Steuerelektronik des Zugfahrzeugs mit einem durch eine Bedienungsperson bedienbares, einen Bildschirm aufweisendes Eingabe- und Anzeigegerät funktional verbunden ist, wobei die Rückfahrkamera dazu eingerichtet ist, ein Kamerabild zum Eingabe- und Anzeigegerät zu übertragen, wobei das Eingabe- und Anzeigegerät dazu eingerichtet ist, das Kamerabild auf dem Bildschirm abzubilden, durch die Bedienungsperson eingebbare Zielortdaten aufzunehmen sowie zur Regel- und Steuerelektronik zu übertragen, wobei die Regel- und Steuerelektronik dazu eingerichtet ist, aus Positionsdaten des Gespannfahrzeugs relativ zu den in das Eingabe- und Anzeigegerät eingegebenen Zielort, aus durch Sensoren bestimmten Fahrzeugdaten, wie dem aktuellen Lenkwinkel der lenkbaren Vorderachse des Zugfahrzeugs, dem aktuellen Knickwinkel einer Deichsel des Anhängers relativ zum Zugfahrzeug und/oder dem aktuellen Knickwinkel des Anhängers relativ zum Zugfahrzeug und/oder zur Deichsel einen zielführenden Fahrschlauch zu berechnen und dessen Graphikinformationen zum Eingabe- und Anzeigegerät zu übertragen, wobei das Eingabe- und Anzeigegerät dazu eingerichtet ist, ein Bild des zielführenden Fahrschlauchs dem Kamerabild auf dem Bildschirm maßstabgetreu so zu überlagern, dass sowohl das Kamerabild als auch das Bild des Fahrschlauchs sichtbar sind, und bei dem die Regel- und Steuerelektronik dazu eingerichtet ist, die notwendigen Lenkbefehle für einen Lenkaktuator der lenkbaren Vorderachse des Zugfahrzeugs und die Lenkbremsbefehle für die Bremsen an den Rädern des Anhängers zu berechnen, sowie die Ansteuerung des Lenkaktuators und der Bremsen an den Rädern des Anhängers in der Weise durchzuführen, dass das Gespannfahrzeug beim Rückwärtsrangieren automatisch in dem Fahrschlauch bis zum eingegebenen Zielort fährt.

Bei diesem elektronischen Bremssystem kann vorgesehen sein, dass das anhängerseitige Steuergerät in das elektronische Bremssystem des Anhängers gerätetechnisch integriert und/oder softwarebezogen implementiert ist, und das elektronische Bremssystem des Anhängers kann ein elektronisches Radschlupfregelsystem umfassen.

Die Erfindung wird nachstehend anhand zweier in der Zeichnung dargestellter Ausführungsbeispiele weiter erläutert. In der Zeichnung zeigt
Fig. 1 ein Gespannfahrzeug, bestehend aus einem zweiachsigen Zugfahrzeug und einem zweiachsigen Anhänger mit einer drehschemelgelagerten sowie lenkbaren Vorderachse, im gestreckten Zustand beim Einleiten eines Rückwärtsrangierens mit Abbremsen eines Rades der gelenkten Anhängerachse, bei dem ein Eingabe- und Anzeigegerät zum Steuern des Rückwärtsrangierens außerhalb des Gespannfahrzeugs angeordnet ist,
Fig. 2 das Gespannfahrzeug gemäß Fig. 1 nach Zurücklegen eines gewissen Rückfahrweges und mit eingeschwenktem Anhänger,
Fig. 3 ein Gespannfahrzeug, bestehend aus einem zweiachsigen Zugfahrzeug und einem zweiachsigen Anhänger mit unlenkbaren Hinterachsen, im gestreckten Zustand beim Einleiten eines Rückwärtsrangierens mit Abbremsen zweier kurveninnerer Räder der ungelenkten Anhängerachsen, bei dem ein Eingabe- und Anzeigegerät zur Steuerung des Rückwärtsrangierens außerhalb des Gespannfahrzeugs angeordnet ist,
Fig. 4 das Gespannfahrzeuggemäß Fig. 3 nach Zurücklegen eines gewissen Rückfahrweges und durch Abbremsen zweier kurveninnerer Räder der ungelenkten Hinterachsen bewirkten Einschwenken des Anhängers,
Fig. 5 einen Ablaufplan der Steuerung des Rückwärtsrangierens eines Gespannfahrzeugs.

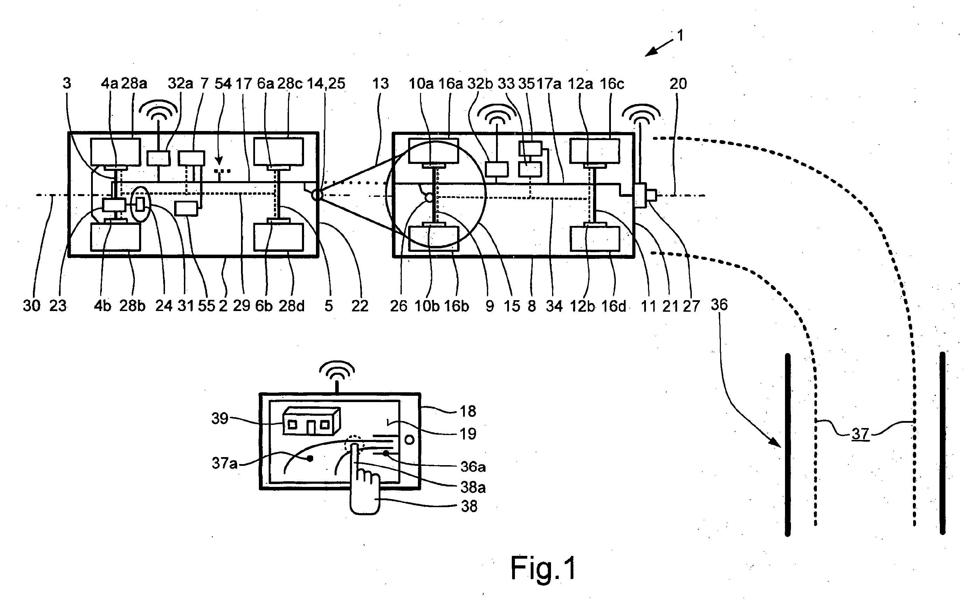

Das in Fig. 1 dargestellte Gespannfahrzeug 1 besteht aus einem Zugfahrzeug 2 und einem zweiachsiger Anhänger 8, auf den noch weiter eingegangen wird. Das Zugfahrzeug 2 weist eine lenkbare Vorderachse 3 und eine ungelenkte Hinterachse 5 auf, wobei die ungelenkte Hinterachse 5 im dargestellten Ausführungsbeispiel die Antriebsachse des Zugfahrzeugs 2 ist. Die Räder 28a, 28b der lenkbaren Vorderachse 3 sind mit Bremsen 4a, 4b und die Räder 28c, 28d der Hinterachse 5 mit Bremsen 6a, 6b versehen. Das Zugfahrzeug 2 kann in einer anderen Ausführungsform auch mehr als nur eine gelenkte Vorderachse und mehr als nur eine ungetenkte Hinterachse aufweisen, ohne die Anwendbarkeit der Erfindung zu beeinträchtigen.

Das Gespannfahrzeug 1 ist in Fig. 1 in seiner gestreckten Stellung dargestellt, bei der die Längsachse 30 des Zugfahrzeugs 2 und die Längsachse 20 des Anhängers 8 koaxial fluchtend ausgerichtet sind.

Der zweiachsige Anhänger 8 weist eine gelenkte Vorderachse 9 und eine ungelenkte Hinterachse 11 auf, er kann aber auch mehr als nur eine gelenkte Vorderachse und mehr als nur eine ungelenkte Hinterachse aufweisen, ohne die Anwendbarkeit der Erfindung zu beeinträchtigen.

Die Räder 16a, 16b der gelenkten Vorderachse 9 des Anhängers 8 sind mit zugeordneten Bremsen 10a, 10b und die Räder 16c, 16b der ungelenkten Hinterachse 11 des Anhängers 8 sind mit ebenfalls zugeordneten Bremsen 12a, 12b versehen. Die gelenkte Vorderachse 9 des Anhängers 8 ist mittels eines Drehschemels 15 lenkbar mit dem Aufbau des Anhängers 8 verbunden sowie mittels einer Deichsel 13 an einer Anhängerkupplung 14 am Heck 22 des Zugfahrzeugs 2 angekoppelt.

Das dargestellte Ausführungsbeispiel zeigt ein Gespannfahrzeug 1, dessen Zugfahrzeug 2 eine Regel- und Steuerelektronik 7 aufweist, welche ein nicht gesondert dargestelltes Radschlupfregelsystem mit umfasst sowie an einen CAN-Bus 17 angeschlossen ist. Die Regel- und Steuerelektronik 7 ist über den CAN-Bus 17 außerdem mit einem Motorsteuergerät 55 verbunden, um den Betrieb des Antriebsmotors des Zugfahrzeugs 2 während eines Rückwärtsrangierens zu steuern oder zumindest zu beeinflussen.

Der Lenkeinschlag der Vorderräder 28a, 28b des Zugfahrzeugs 2 wird durch Betätigung eines üblichen Lenkrades 31 und einem Lenkaktuator 23 bewirkt. Der Lenkaktuator 23 ist in bekannter Weise als Servolenkung ausgebildet, so dass am Lenkrad 31 durch den Fahrer nur geringe Lenkkräfte aufzubringen sind. Außerdem ist der Lenkaktuator 23 dazu eingerichtet, unabhängig von der Betätigung des Lenkrades 31 eine Lenkbewegung der Vorderräder 28a, 28b des Zugfahrzeugs 2 zu bewirken. Die Regelund Steuerelektronik 7 ist dazu eingerichtet, unabhängig von einer Lenkradbetätigung Steuerungssignale zu erzeugen, mit denen der Lenkaktuator 23 betätigbar ist. Der durch Betätigung des Lenkrades 31 oder durch eine Ansteuerung des Lenkaktuators 23 bewirkte Lenkwinkel wird mittels eines Lenkwinkelsensors 24 erfasst und an die Regelund Steuerelektronik 7 übermittelt. Beim Betätigen eines nicht dargestellten Bremspedals der Betriebsbremse des Gespannfahrzeugs 1 durch den Fahrer gelangt ein diesbezügliches Bremssignal an die Regel- und Steuerelektronik 7. Die Regel- und Steuerelektronik 7 erzeugt auf der Grundlage dieses Bremssignals sowie anderer Sensorinformationen Steuerbefehle für Aktuatoren an den Bremsen 4a, 4b, 6a, 6b des Zugfahrzeugs 2, die über hier vereinfacht dargestellte Steuerleitungen 29 weitergeleitet werden.

Der Anhänger 8 weist ein eigenes elektronisches Bremssystem 33 auf, in das in nicht dargestellter Weise ein Radschlupfregelsystem softwaremäßig und hardwaremäßig integriert ist. Das elektronische Bremssystem 33 steht mit Sensoren über nicht dargestellte Sensorleitungen und über Steuerleitungen 34 mit den nicht gesondert dargestellten Aktuatoren an den Bremsen 10a, 10b, 12a, 12b der Räder 16a, 16b, 16c, 16d des Anhängers 8 in Verbindung. Das elektronische Bremssystem 33 steuert die Bremsen 10a, 10b, 12a, 12b des Anhängers 8, die bei dem als Nutzfahrzeug ausgebildeten Gespannfahrzeug 1 mittels pneumatischer Aktuatoren betätigt werden.

Die Regel- und Steuerelektronik 7 des Gespannfahrzeugs 1 und das elektronische Bremssystem 33 des Anhängers 8 sind so eingerichtet, dass diese während einer Vorwärtsfahrt bei einer Bremsbetätigung jede einzelne Bremse 4a, 4b, 6a, 6b des Zugfahrzeugs 2 und jede einzelne Bremse 16a, 16b, 16c, 16d des Anhängers 8 so ansteuern können, dass diese in Bremswirkung geraten und keines der Räder 28a, 28b, 28c, 28d des Zugfahrzeugs 2 und keines der Räder 16a, 16b, 16c, 16d des Anhängers 8 blockiert. Droht das Gespannfahrzeug 1 bei einer Vorwärtsfahrt bei einer Geradeausfahrt oder bei einer Kurvenfahrt seitlich auszubrechen, steuert die Regel- und Steuerelektronik 7 des Zugfahrzeugs 2 in Verbindung mit dem elektronischen Bremssystem 33 des Anhängers 8 die Bremsen 4a, 4b, 6a, 6b des Zugfahrzeugs 2 und die Bremsen 10a, 10b, 12a, 12b des Anhängers 8 in bekannter Weise derart seitenweise und/oder achsweise an, dass das Gespannfahrzeug, 1 durch geeignete Bremsbetätigung stabilisiert wird.

Die Bremssignale für die Bremsen 10a, 10b, 12a, 12b des Anhängers 8 gelangen wie erwähnt von dem elektronischen Bremssystem 33 des Anhängers 8 zumindest über eine Steuerleitung 34 an die Aktuatoren dieser Bremsen 10a, 10b, 12a, 12b. Zwischen der Regel- und Steuerelektronik 7 des Zugfahrzeugs 2 und dem elektronischen Bremssystem 33 des Anhängers 8 besteht eine gepunktet gezeichnete Signalverbindung 17, 17a in Form eines an sich bekannten CAN-Bus, an die auch wenigstens eine Rückfahrkamera 27 am Heck 21 des Anhängers 8 angeschlossen ist. Die Rückfahrkamera 27 am Heck 21 des Anhängers 8 kann ihr Signal auch unabhängig von dem CAN-Bus weiterleiten, beispielsweise per Funk.

An der Anhängerkupplung 14 des Zugfahrzeugs 2 ist ein nicht gesondert dargestellter Knickwinkelsensor 25 angeordnet, der mit dem CAN-Bus 17 des Zugfahrzeugs 2 verbunden ist. Ein weiterer Knickwinkelsensor 26 ist im Drehmittelpunkt des Drehschemels 15 angeordnet und mit dem CAN-Bus 17a des Anhängers 8 verbunden.

Eine stark schematisch dargestellte Gangschaltvorrichtung für ein Getriebe im Zugfahrzeug 2 weist einen integrierten Gangschaltsensor 54 auf, der mit dem CAN-Bus 17 des Zugfahrzeugs 2 verbunden. Der in die Gangschaltvorrichtung integrierte Gangschaltsensor 54 sendet über den CAN-Bus 17 des Zugfahrzeugs 2 ein Signal an die Regel- und Steuerelektronik 7 des Zugfahrzeugs 2, zumindest wenn der Rückwärtsgang des Getriebes eingelegt ist.

Zu dem in Fig. 1 dargestellten Ausführungsbeispiel gehört auch ein Eingabe- und Anzeigegerät 18, das, wie hier dargestellt, als mobile Einheit ausgebildet ist und über eine Internet-Anbindung und eine Anbindung an ein lokales Funknetz (WLAN) verfügt. Entsprechend weisen das Zugfahrzeug 2 ein erstes WLAN-Sende- und Empfangsgerät 32a und der Anhänger 8 ein zweites WLAN-Sende- und Empfangsgerät 32b auf, über die ein Datenaustausch zumindest zwischen der Regel- und Steuerelektronik 7 des Zugfahrzeugs 2 und dem Eingabe- und Anzeigegerät 18 stattfinden kann. Entsprechend kann auch ein Datenaustausch zwischen dem elektronischen Bremssystem 33 des Anhängers 8 bzw. einem diesem anhängerseitig vorgeschalteten Steuergerät 35. und dem Eingabe- und Anzeigegerät 18 sowie zwischen der Regel- und Steuerelektronik 7 und dem elektronischen Bremssystem 33 bzw. dem vorgeschalteten Steuergerät 35 stattfinden, wenn zwischen dem CAN-Bus 17 des Zugfahrzeugs 2 und dem CAN-Bus 17a des Anhängers 8 keine Kabelverbindung, die hier punktiert angedeutet ist, vorhanden ist.

Das Eingabe- und Anzeigegerät 18 ist mit einem berührungsempfindlichen Bildschirm 19 versehen, mittels dem eine nur durch eine Hand symbolisierte Bedienungsperson 38 Befehle eingeben kann, indem der berührungsempfindliche Bildschirm 19 mittels eines der Finger 38a der Bedienungsperson 38 in bekannte Weise berührt und/oder dort verschoben wird.

Bei dem Eingabe- und Anzeigegerät 18 kann es sich beispielsweise um ein Mobiltelefon mit Computer-Funktionalität und einem sattelitengestützten Navigationssystem sowie mit Internet-Anbindung und Anbindung an ein lokales Funknetz (WLAN) handeln. Das Eingabe- und Anzeigegerät 18 kann aber auch als ein tragbarer, flacher Rechner (Tablet-PC), ebenfalls mit Konvektivität zu einem globalen Navigationssatellitensystem sowie mit Internet-Anbindung und Anbindung an ein lokales Funknetz (WLAN) handeln. Die genannten Sende- und Empfangseigenschaften des Eingabe- und Anzeigegeräts 18 sind dort durch eine Antenne und ein Funksignalsymbol dargestellt.

In Fig. 1 ist ein durch das Gespannfahrzeug 1 mittels Rückwärtsrangieren anzufahrender Zielort 36 schematisch dargestellt, der etwa rechtwinklig zur in Fig. 1 dargestellten Ausgangsposition des Gespannfahrzeugs 1 angeordnet ist. Bei dem Zielort kann es sich um einen Parkplatz handeln, beispielsweise zwischen anderen bereits geparkten Fahrzeugen, oder um eine Laderampe.

Durch die wenigstens eine, im Heckbereich 21 des Anhängers 8 angeordnete Rückfahrkamera 27 wird ein Kamerabildder Umgebung des Zugfahrzeugs 1, insbesondere des Zielorts 36 sowie etwaiger in diesem Bereich liegender Hindernisse aufgenommen und an die Regel- und Steuerelektronik 7 sowie an das Eingabe- und Anzeigegerät 18 gesendet. In letzterem wird das aktuelle Kamerabild auf dem Bildschirm 19. des Eingabe- und Anzeigegeräts 18 abgebildet. Zunächst erscheint auf dem Bildschirm 19 ein Bild 36a des Zielorts 36 und der benachbarten Umgebung 39, die durch ein Gebäude dargestellt ist.

Das Eingabe- und Anzeigegerät 18 ist dazu eingerichtet, durch die Bedienungsperson 38 dort eingebbare Zielortdaten aufzunehmen und zur Regel- und Steuerelektronik 7 zu übertragen. Die Regel- und Steuerelektrönik 7 ist dazu eingerichtet, aus Positionsdaten des Gespannfahrzeugs 1 relativ zu dem in das Eingabe- und Anzeigegerät 18 eingegebenen Zielort 36, aus durch den Lenkwinkelsensor 24, den Knickwinkelsensor 25 zwischen dem Zugfahrzeug 2 und der Deichsel 13 sowie durch den Knickwinkelsensor 26 zwischen der Deichsel 13 und der Anhänger-Längsachse 20 bestimmten Fahrzeugdaten, wie dem aktuellen Lenkwinkel der lenkbaren Vorderachse 3 des Zugfahrzeugs 2, dem aktuellen Knickwinkel der Deichsel 13 des Anhängers 8 relativ zum Zugfahrzeug 2 und dem aktuellen Knickwinkel des Anhängers 8 relativ zur Deichsel 13, einen zielführenden Fahrschlauch 37 zu berechnen sowie dessen Daten zum Eingabe- und Anzeigegerät 18 zu übertragen.

Das Eingabe- und Anzeigegerät 18 ist dazu eingerichtet, ein Bild 37a des zielführenden Fahrschlauchs 37 im Kamerabild mit dem Bild 36a des Zielorts 36 und dem Bild 39 der Umgebung 39 auf dem Bildschirm 19 maßstabgetreu so zu überlagern, dass sowohl der zielführende Fahrschlauch 37 mit dem Bild 36a des Zielorts 36 als auch das Bild der Umgebung 39 erkennbar sind.

Die Regel- und Steuerelektronik 7 ist des Weiteren dazu eingerichtet, die notwendigen Steuerbefehle für den Lenkaktuator 23 der lenkbaren Vorderachse 3 des Zugfahrzeugs 2 und die Lenkbremsbefehle für die Bremsaktuatoren an den Rädern 16a, 16b, 16c, 16d des Anhängers 8 zu berechnen sowie an diese Vorrichtungen weiterzuleiten. Die genannten Steuerbefehle der Regel- und Steuerelektronik 7 werden dabei in der Weise durchgeführt, dass das Gespannfahrzeug 1 beim Rückwärtsrangieren automatisch innerhalb des Fahrschlauchs 37 bis zum eingegebenen Zielort 36 fährt.

Der Rückwärtsrangiervorgang lässt sich beispielsweise dadurch einleiten, dass zunächst im Fahrerhaus des Zugfahrzeugs 2 durch den Fahrer mittels der Gangschaltvorrichtung der Rückwärtsgang eingelegt wird und vom darin integrierten Gangsehaltsensor 54 ein Signal an die Regel- und Steuerelektronik 7 übermittelt wird. Der Fahrer kann nunmehr im Fahrerhaus verbleiben oder dieses verlassen. Anschließend lässt er durch eine Eingabe in das Eingabe- und Anzeigegerät 18 den Rückwärtsrangiervorgang ausführen, wozu das Eingabe- und Anzeigegeräts 18 wie beschrieben mit der Regel- und Steuerelektronik 7 zum Lenken der Räder 28a, 28b der lenkbaren Vorderachse 3 des Zugfahrzeugs 2 sowie zum gezielten Bremsbetätigen von Bremsen 10a, 10b, 12a, 12b des Anhängers 8 Kontakt aufnimmt.

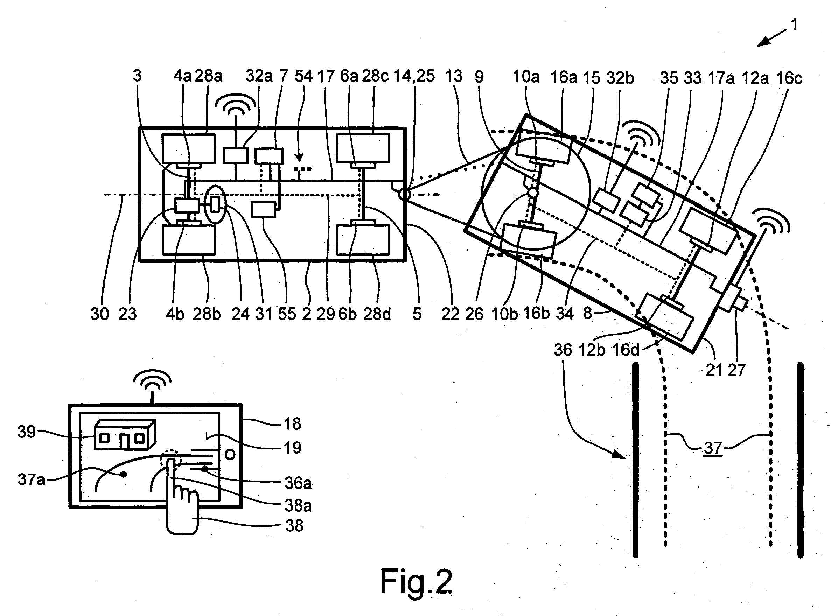

Wie in Fig. 2 zeigt, kann die Lenkbewegung des Anhängers 8 in Richtung des Fahrschlauchs 37 bei der Rückwärtsfahrt dadurch eingeleitet werden, dass das kurvenäußere Rad 16a der lenkbaren Vorderachse 9 durch das Zusammenwirken der Regel- und Steuerelektronik 7 des Zugfahrzeugs 2 mit dem elektronischen Bremssystem 33 unter Zuhilfenahme des Steuergeräts 35 des Anhängers 8 abgebremst wird. Hierdurch wird die über die Deichsel 13 mit dem Zugfahrzeug 2 gekoppelte, lenkbare Vorderachse 9 des Anhängers 8 in der in Fig. 2 dargestellten Weise am Anfang der Rückwärtsrangierbewegung ausgelenkt, und der Heckbereich 21 des Anhängers 8 mit der nicht lenkbaren Hinterachse 11 in Richtung des Fahrschlauchs 37 eingeschwenkt. Gleichzeitig wird durch die Regel- und Steuerelektronik 7 des Zugfahrzeugs 2 der Lenkaktuator 23 für die Lenkung der Räder 28a, 28b der lenkbaren Vorderachse 3 des Zugfahrzeugs 2 aktiviert, so dass auch das Zugfahrzeug 2 durch die Regel- und Steuerelektronik 7 entlang dem Fahrschlauch 37 dirigiert wird, bis das Gespannfahrzeug 1 die Parkposition im Bereich des Zielorts 36 erreicht hat.

Die Regel- und Steuerelektronik 7 ist in Verbindung mit dem über das Steuergerät 35 ansteuerbaren elektronischen Bremssystems 33 des Anhängers 8 in der Lage, alle Bremsen 10a, 10b, 12a, 12b der Räder 16a, 16b, 16c, 16d des Anhängers 8 unabhängig voneinander so anzusteuern, dass durch ein Abbremsen der kurvenäußeren Räder 16a, 16c und/oder der kurveninneren Räder 16b, 16d das Rückwärtsrangieren innerhalb des Fahrschlauchs 37 gelingt, einschließlich etwaig notwendig werdender Korrekturen. Es sei angemerkt, dass auch eine Ausführungsform möglich ist, bei der die Regel- und Steuerelektronik 7 ihre Bremslenkbefehle direkt an das elektronische Bremssystem 33 sendet.

Außerdem ist das Eingabe- und Anzeigegerät 18 dazu eingerichtet, Korrekturen am zielführenden Fahrschlauch 37 durch eine manuelle Eingabe zu empfangen, indem die Bedienungsperson 38 durch Berühren des Bildschirms 19 mittels eines Fingers 38a sowie Verschieben desselben den Fahrschlauch 37 oder dessen Position verändert, um Abweichungen des Fahrschlauchs 37 vom eingegebenen Zielort 36 zu korrigieren oder Änderungen des Zielorts 36 vorzunehmen. Die Regel- und Steuerelektronik 7 ist dementsprechend dazu eingerichtet, diese Korrekturen oder Änderungen in das Bild 37a des Fahrschlauchs 37, in das Bild 36a des Zielorts 36 und in die daraus folgenden Steuerbefehle für die lenkbaren Vorderachse 3 des Zugfahrzeugs 2 sowie in die Lenkbremsbefehle für die Räder 16a, 16b, 16c, 16d des Anhängers 8 einzubeziehen, um das Gespannfahrzeug 1 automatisch exakt zum gewünschten Zielort 36 zu dirigieren.

Die Regel- und Steuerelektronik 7 kann des Weiteren dazu eingerichtet sein, auf dem Bildschirm 19 des Eingabe- und Anzeigegeräts 18 Bereiche, beispielsweise durch Schraffuren, zu kennzeichnen, die außerhalb des maximalen Lenkeinschlags des Gespannfahrzeugs 1 liegen und somit aus der aktuellen Position des Gespannfahrzeugs 1 nicht erreichbar sind. Die Regel- und Steuerelektronik 7 berechnet dann aus den übermittelten Daten, ob der eingegebene Zielort 36 aus der aktuellen Position des Gespannfahrzeugs 1 erreichbar ist, und generiert, wenn dies nicht der Fall ist, eine Anzeige auf dem Bildschirm 19 des Eingabe- und Anzeigegeräts 18, aus der hervorgeht, ob und in welchem Umfang die Position des Gespannfahrzeugs 1 zu verändern ist, um den eingegebenen Zielort 36 automatisch anzufahren. Beispielsweise lässt sich die Position des Gespannfahrzeugs 1 in der Weise verändern, dass das Gespannfahrzeug 1 zunächst durch eine Vorwärtsfahrt gestreckt und dadurch besser ausgerichtet wird, wobei dieser Vorgang durch eine geeignete Anzeige, die das Erreichen einer günstigen Ausgangsposition anzeigt, unterstützt werden kann, woraufhin der Rückwärtsrangiervorgang in der beschriebenen Weise erstmal oder erneut eingeleitet wird.

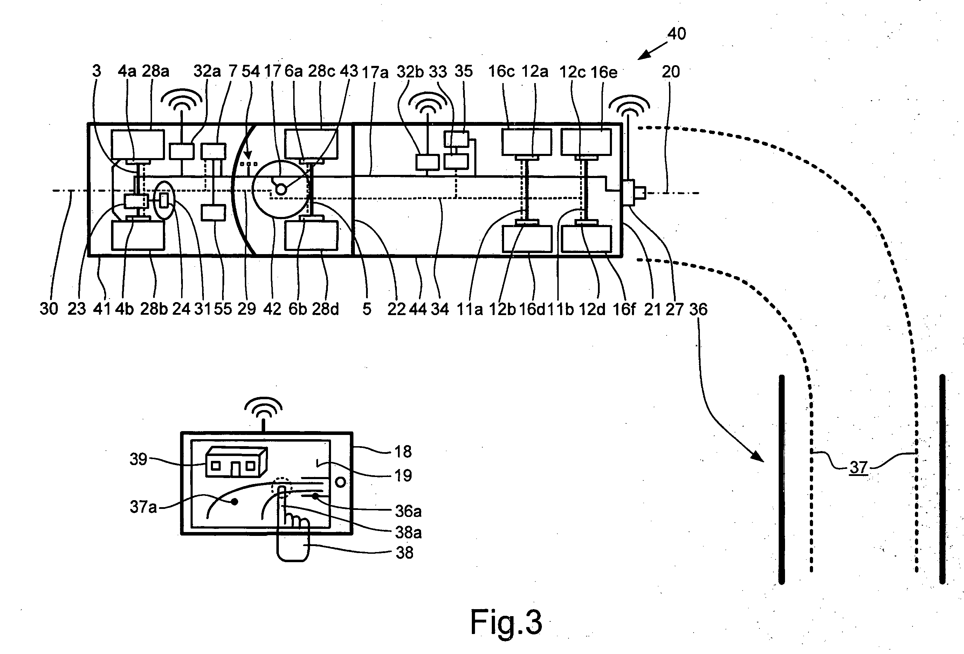

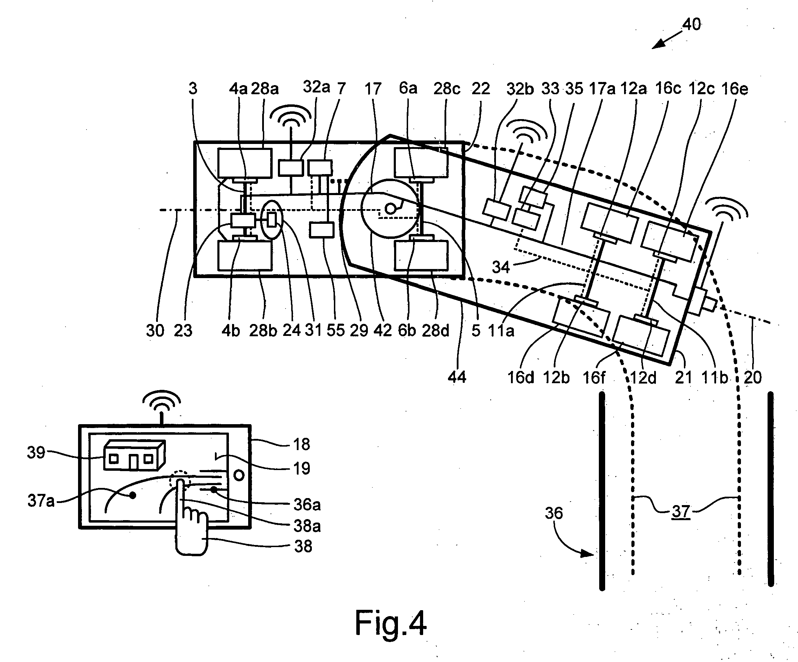

Während bei dem Gespannfahrzeug 1 bestehend aus einem Zugfahrzeug 2 und einem Anhänger 8 mit wenigstens einer lenkbaren Vorderachse 9 die Lenkung des Anhängers 8 durch Bremseingriffe an einzelne oder mehrere der Räder 16a, 16b, 16c, 16d des Anhängers 8 unabhängig von den Lenkbefehle für den Lenkaktuator 23 für die Räder 28a, 28b der lenkbaren Vorderachse 3 des Zugfahrzeugs 2 erfolgen kann, ist es bei einem Gespannfahrzeug 40 bestehend aus einem Zugfahrzeug 41 in Form eines Sattelschleppers und einem Anhänger 44 in Form eines Sattelaufliegers gemäß dem Ausführungsbeispiel der Figuren 3 und 4 erforderlich, dass die Lenkung des Zugfahrzeugs 41 auf die Position des Anhängers 44 in Form eines Sattelaufliegers reagiert und entsprechend modifiziert wird.

Bei dem Ausführungsbeispiel gemäß den Figuren 3 und 4 sind das Zugfahrzeug in Form eines Sattelschleppers mit der Bezugsziffer 41 und der Anhänger als Sattelauflieger mit der Bezugsziffer 44 bezeichnet. Des Weiteren ist der Anhänger 44 mit dem Zugfahrzeug 41 mittels einer Sattelkupplung 42 gekoppelt, in die ein Knickwinkelsensor 43 zur Messung des Knickwinkels zwischen dem Zugfahrzeug 41 und dem Anhänger 44 integriert ist. Der Anhänger 44 weist zwei ungelenkte Hinterachsen 11a und 11b auf, deren Räder 16c, 16d und 16e, 16f jeweils mit Bremsen 12a, 12b und 12c, 12d versehen sind.

Alle weiteren Elemente der Ausführungsform gemäß den Figuren 3 und 4 stimmen mit den Elementen der Ausführungsform gemäß den Figuren 1 und 2 überein und sind dementsprechend mit denselben Bezugsziffern versehen.

Der Rückwärtsrangiervorgang des Gespannfahrzeugs 40 gemäß den Figuren 3 und 4 läuft in ähnlicher Weise ab, wie der Rangiervorgang des Gespannfahrzeugs 1 gemäß den Figuren 1 und 2, indem in diesem Fall zum Einschwenken des Hecks 21 des Anhängers 44 in den Fahrschlauch 37 wenigstens eines der kurveninneren Räder 16b, 16f abgebremst wird, während das Zugfahrzeug 41 rückwärts fährt. Dabei wird auch das Zugfahrzeug 41 automatisch in den Fahrschlauch 37 eingelenkt, was dann wiederum ein entsprechendes Bremsen der kurvenäußeren Räder 16c, 16e und/oder kurveninneren Räder 16d, 16f erforderlich macht. Dementsprechend muss die Regelund Steuerelektronik 7 des Zugfahrzeugs 41 daran angepasst sein, dass es sich bei dem Anhänger 44 um einen Sattelauflieger handelt, der keine gelenkte Vorderachse aufweist.

Wenn es sich bei dem Gespannfahrzeug 1, das den Anhängers 8 mit der lenkbaren Vorderachse 9 bewegt, um einen Lastwagen handelt, kann die Regel- und Steuerelektronik 7 so programmiert sein, dass nur das Rückwärtsrangieren dieses Gespannfahrzeug 1, bestehend aus einem als Lastwagen ausgebildeten Zugfahrzeug 2 und einem Anhänger 8 mit einer lenkbaren Vorderachse 9, zu steuern ist. Ebenso kann eine entsprechende Programmierung der Regel- und Steuerelektronik 7 des Gespannfahrzeugs 40 bestehend aus einem Zugfahrzeug 41 in Form eines Sattelschleppers und einem Anhänger 44 in Form eines Sattelaufliegers in der beschriebenen Weise festgelegt sein.

Sofern allerdings das Zugfahrzeug 41 in Form eines Sattelschleppers auch dazu benutzt werden kann und soll, einen Anhänger 8 mit einer lenkbaren Vorderachse 9 rückwärts in einem Fahrschlauch 37 zu einem Zielort 36 zu rangieren, so muss die Regel- und Steuerelektronik 7 für beide Möglichkeiten programmiert sein und automatisch oder durch manuelle Eingabe für die jeweilige Form des Gespannfahrzeugs 1, 40 gemäß den Figuren 1 und 2 oder gemäß den Figuren 3 und 4 aktiviert werden. Die jeweilige Form des Gespannfahrzeugs 1, 40 kann beispielsweise mittels eines Kuppelsensors an der Anhängerkupplung 14 oder an der Sattelkupplung 42 des Gespannfahrzeugs 1, 40 erkannt und der Regel- und Steuerelektronik 7 mitgeteilt werden.

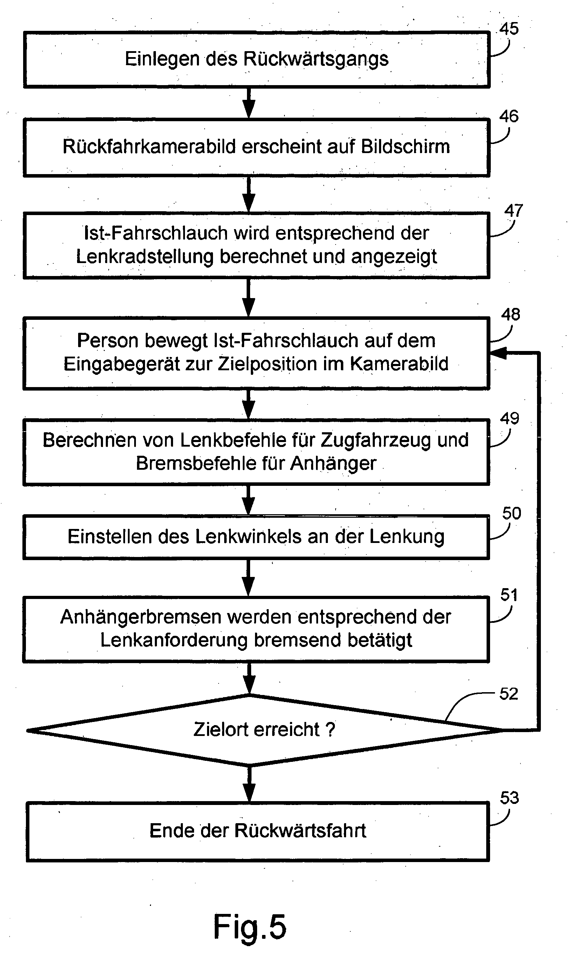

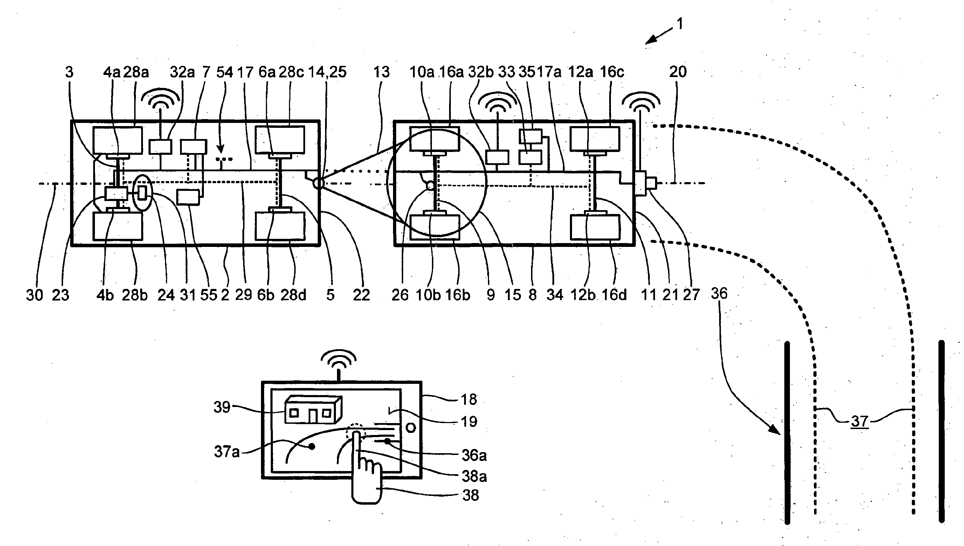

Aus dem Ablaufplan gemäß Fig. 5 ergibt sich der Ablauf einer Steuerung des Rückwärtsrangierens eines Gespannfahrzeugs 1, 40:

Im ersten Schritt 45 wird der Rückwärtsgang des Fahrzeuggetriebes eingelegt und dadurch ein Signal erzeugt, das an die Regel- und Steuerelektronik 7 gesendet wird, welche daraufhin die Rückfahrkamera 27 aktiviert, sofern diese nicht ständig eingeschaltet ist. Im zweiten Schritt 46 erscheint das Bild der Rückfahrkamera 27 auf dem Bildschirm 19 des Eingabe- und Anzeigegeräts 18, welches ein Bild 36a des Zielorts 36 sowie die Umgebung 39 des Zielorts 36 zeigt. Im dritten Schritt 47 berechnet die Regel- und Steuerelektronik 7 einen so genannten Ist-Fahrschlauch 37 entsprechend der aktuellen Lenkradstellung, welcher auf dem Bildschirm 19 des Eingabe- und Anzeigegeräts 18 als Bild 37a des Fahrschlauchs 37 angezeigt wird. Der vierte Schritt 48 veranschaulicht die Möglichkeit, das Bild 37a des Fahrschlauchs 37 auf dem Bildschirm 19 des Eingabe- und Anzeigegeräts 18 mittels des Fingers 38a einer Bedienperson 38 so zu bewegen, dass das Bild 37a des fahrzeugfernen Endes des Fahrschlauchs 37a mit dem Bild des Zielorts 36a in Überdeckung gelangt. Im fünften Schritt 49 berechnet die Regel- und Steuerelektronik 7 die erforderlichen Lenkbefehle für den Lenkaktuator 23 des Zugfährzeugs 2, 41 und die Bremsbefehle für die Bremsen des Anhängers 8, 44. Im sechsten Schritt 50 wird der Lenkwinkel der Räder 28a, 28b der lenkbaren Vorderachse 3 des Zugfahrzeugs 2, 41 mittels des Lenkaktuators 23 eingestellt. Im siebten Schritt 51 werden gezielt einzelne Bremsen des Anhängers 8, 44 entsprechend den Lenkanforderungen bremsend betätigt, und im achten Schritt 52 wird geprüft, ob der Zielort 36 erreicht ist. Ist dies der Fall, dann bedeutet dies im Schritt 53 das Ende des Rückwärtsrangierens und das Ende der Regeleingriffe in die Lenkung des Zugfahrzeugs 2, 41 und die Bremsen des Anhängers 8, 44. Ist dies nicht der Fall, geht es zurück zum vierten Schritt 48, und die nachfolgenden Schritte 49, 50, 51 werden erneut durchgeführt.

Die Erfindung ergibt eine vollständig automatische und daher einfache Bedienung zur Steuerung des Rückwärtsrangierens eines Gespannfahrzeugs 1, 40, eine optimale Manövrierbarkeit, ein schnelles Rangieren, weniger Rangierschäden, optimale Ergebnisse auch bei ungeübten Fahrern, die Befahrbarkeit von engen Fahrwegradien, bei denen ein Einknicken ausgeschlossen ist, und lässt sich mit kostengünstigen Eingabe- und Anzeigegeräten durchführen.

Alle in der vorstehenden Figurenbeschreibung, in den Ansprüchen und der Beschreibungseinleitung genannten Merkmale sind sowohl einzeln als auch in beliebiger Kombination miteinander einsetzbar. Die Erfindung ist somit nicht auf die beschriebenen und beanspruchten Merkmalskombinationen beschränkt, vielmehr sind alle Merkmalskombinationen als offenbart zu betrachten.

### Bezugszeichenliste (Bestandteil der Beschreibung)

- 1: Gespannfahrzeug
- 2: Zugfahrzeug
- 3: Lenkbare Vorderachse des Zugfahrzeugs
- 4a, 4b: Bremsen der Vorderräder des Zugfahrzeugs
- 5: Hinterachse des Zugfahrzeugs
- 6a, 6b: Bremsen der Hinterräder des Zugfahrzeugs
- 7: Regel- und Steuerelektronik
- 8: Anhänger
- 9: Gelenkte Vorderachse des Anhängers
- 10a, 10b: Bremsen der Vorderräder des Anhängers
- 11: Ungelenkte Hinterachse des Anhängers
- 12a, 12b: Bremen der Hinterräder des Anhängers
- 13: Deichsel
- 14: Anhängerkupplung
- 15 -: Drehschemel
- 16a: Rechtes Vorderrad des Anhängers
- 16b: Linkes Vorderrad des Anhängers
- 16c: Rechtes Hinterrad des Anhängers
- 16d: Linkes Hinterrad des Anhängers
- 17: CAN-Bus des Zugfahrzeugs
- 17a: CAN-Bus des Anhängers
- 18: Eingabe- und Anzeigegerät
- 19: Berührungsempfindlicher Bildschirm
- 20: Längsachse des Anhängers
- 21: Heckbereich des Anhängers
- 22: Heck des Zugfahrzeugs
- 23: Lenkaktuator für die lenkbaren Räder der Vorderachse des Zugfahrzeugs
- 24: Lenkwinkelsensor für die lenkbaren Räder der Vorderachse des Zugfahrzeugs
- 25: Knickwinkelsensor zwischen dem Zugfahrzeug und der Deichsel
- 26: Knickwinkelsensor zwischen der Deichsel und der Anhänger-Längsachse
- 27: Rückfahrkamera
- 28a: Rechtes Vorderrad des Zugfahrzeugs
- 28b: Linkes Vorderrad des Zugfahrzeugs
- 28c: Rechtes Hinterrad des Zugfahrzeugs
- 28d: Linkes Hinterrad des Zugfahrzeugs
- 29: Steuerleitung für die Bremsen des Zugfahrzeugs
- 30: Längsachse des Zugfahrzeugs
- 31: Lenkrad
- 32a: Erstes WLAN-Sende- und Empfangsgerät am Zugfahrzeug
- 32b: Zweites WLAN-Sende- und Empfangsgerät am Anhänger
- 33: Elektronisches Bremssystem des Anhängers
- 34: Steuerleitung für die Bremsen des Anhängers
- 35: Steuergerät des Bremssystems des Anhängers
- 36: Zielort
- 36a: Bild des Zielorts
- 37: Fahrschlauch
- 37a: Bild des Fahrschlauchs
- 38: Durch eine Hand symbolisierte Bedienungsperson
- 38a: Finger der Hand
- 39: Umgebung
- 40: Gespannfahrzeug
- 41: Zugfahrzeug
- 42: Sattelkupplung
- 43: Knickwinkelsensor zwischen Zugfahrzeug-Längsachse und Anhänger-Längsachse
- 44: Sattelauflieger
- 45 - 53: Verfahrensschritte im Ablaufplan der Fig. 5
- 54: Gangsschaltsensor
- 55: Motorsteuergerät

## Patentansprüche

1. Verfahren zur Steuerung des Rückwärtsrangierens eines Gespannfahrzeugs (1, 40), bestehend aus einem Zugfahrzeug (2, 41) mit wenigstens einer automatisch lenkbaren Vorderachse (3) und mit wenigstens einer ungelenkte Hinterachse (5) sowie mit einem Anhänger (8, 44), mit wenigstens einer Rückfahrkamera (27) im Heckbereich (21) des Anhängers (8, 44), mit einem durch eine Bedienungsperson (38) bedienbaren Eingabe- und Anzeigegerät (18) mit einem Bildschirm (19) für das Kamerabild, und mit einer Regel- undSteuerelektronik (7),
- bei dem die Regel- und Steüerelektronik (7) aus einem durch die Bedienungsperson (38) in das Eingabe- und Anzeigegerät (18) eingebbaren Zielort (36),
aus Positionsdaten des Gespannfahrzeugs (1, 40) relativ zu dem Zielort (36),
aus mittels Sensoren (24, 25, 26, 43, 54) bestimmte Fahrzeugdaten, wie dem aktuellen Lenkwinkel der lenkbaren Vorderachse (3) des Zugfahrzeugs (2, 41),
aus dem aktuellen Knickwinkel einer Deichsel (13) des Anhängers (8) relativ zum Zugfahrzeug (2) und/oder aus dem aktuellen Knickwinkel des Anhängers (44) zum Zugfahrzeug (41) und/oder der Deichsel (13),
einen zielführenden Fahrschlauch (37) berechnet sowie zugehörige Graphikinformationen an das Eingabe- und Anzeigegerät (18) überträgt,
- bei dem das von der Rückfahrkamera (27) aufgenommene Bild an das Eingabe- und Anzeigegerät (18) übertragen sowie dort dargestellt wird,
- bei dem das Eingabe- und Anzeigegerät (18) auf seinem Bildschirm (19) das Kamerabild derart durch das Bild (37a) des zielführenden Fahrschlauchs (37) überlagert darstellt, dass das Bild (37a) des Fahrschlauchs (37) und das Kamerabild gleichzeitig sichtbar sind,
- bei dem die Regel- und Steuerelektronik (7) Steuerbefehle für einen Lenkaktuator (23) an der lenkbaren Vorderachse (3) des Zugfahrzeugs (2, 41) berechnet,
- und bei dem die Regel- und Steuerelektronik (7) eine Ansteuerung des Lenkaktuators (23) derart durchführt und/oder auslöst, dass das Gespannfahrzeug (1, 40) beim Rückwärtsrangieren automatisch im Fahrschlauch (37) zum eingegebenen Zielort (36) fährt,
**dadurch gekennzeichnet, dass**
der Anhänger (8, 44) zum automatischen Lenken desselben einseitig abbremsbare Räder (16a, 16b, 16c, 16d, 16e, 16f) aufweist,
die Regel- und Steuerelektronik (7) Lenkbremsbefehle für die Bremsen (10a, 10b, 12a, 12b, 12c, 12d) an den Rädern (16a, 16b, 16c, 16d, 16e, 16f) des Anhängers (8, 44) berechnet, und
bei dem die Regel- und Steuerelektronik (7) zusätzlich oder alternativ zur Ansteuerung des Lenkaktuators (23) eine Ansteuerung der Bremsen (10a, 10b, 12a, 12b, 12c, 12d) der Räder (16a, 16b, 16c, 16d, 16e, 16f) des Anhängers (8, 44) derart durchführt und/oder auslöst, dass das Gespannfahrzeug (1, 40) beim Rückwärtsrangieren automatisch im Fahrschlauch (37) zum eingegebenen Zielort (36) fährt, und
bei dem durch die Regel- und Steuerelektronik (7) Bereiche auf dem Bildschirm (19) des Eingabe- und Anzeigegeräts (18) gekennzeichnet werden, die außerhalb des maximalen Lenkeinschlags des Gespannfahrzeugs (1, 40) liegen und somit aus der aktuellen Position des Gespannfahrzeugs (1, 40) nicht erreichbar sind.

2. Verfahren nach Anspruch 1, bei dem der zielführende Fahrschlauch (37) bei während des Rückwärtsrangierens auftretenden Abweichungen des Fahrschlauchs (37) vom Zielort (36) oder während des Rückwärtsrangierens auftretenden Änderungen des Zielorts (36) durch manuelle Eingabe in das Eingabe- und Anzeigegerät (18) korrigierbar ist, um das Gespannfahrzeug (1, 40) automatisch exakt zum Zielort (36) zu dirigieren.

3. Verfahren nach Anspruch 1 oder 2, bei dem mit dem Einlegen des Rückwärtsgangs ein Signal an das Eingabe- und Anzeigegerät (18) sowie an die Regel- und Steuerelektronik (7) zum Einleiten des Rückwärtsrangiervorgangs generiert wird.

4. Verfahren nach einem der Ansprüche 1 bis 3, bei dem die Regel- und Steuerelektronik (7) aus den ihr übermittelten Daten berechnet, ob der eingegebene Zielort (36) aus der aktuellen Position des Gespannfahrzeugs (1, 40) erreichbar ist, und wenn dies nicht der Fall ist, eine Anzeige auf dem Bildschirm (19) des Eingabe- und Anzeigegeräts (18) generiert, aus der hervorgeht, ob und in welchem Umfang die Position des Gespannfahrzeugs (1, 40) zu verändern ist, um den eingegebenen Zielort (36) automatisch anzufahren.

5. Verfahren nach einem der Ansprüche 1 bis 4, bei dem zur Lenkung des Anhängers (8, 44) entsprechend einer mit dem zielführenden Fahrschlauch (37) berechneten Richtungsvorgabe von der Regel- und Steuerelektronik (7) berechnete Lenkbremsbefehle für die Bremse (10a, 10b, 12a, 12b, 12c, 12d) wenigstens eines Rades (16a, 16b, 16c, 16d, 16e, 16f) des Anhängers (8, 44) direkt oder über ein Steuergerät (35) im Anhänger (8, 44) an ein elektronischen Bremssystem (33) im Anhänger (8, 44) gesendet werden, und dass das elektronische Bremssystem (33) die Bremse (10a, 10b, 12a, 12b, 12c, 12d) wenigstens eines Rades (16a, 16b, 16c, 16d, 16e, 16f) einer Seite wenigstens einer Achse (9, 11, 11a, 11b) des Anhängers (8, 44) derart abgebremst, dass beim Rückwärtsrangieren der Anhänger (8, 44) zusammen mit dem automatisch gelenkten Zugfahrzeug (2, 31) in dem Fahrschlauch (37) bis zum Zielort (36) fährt.

6. Verfahren nach Anspruch 5, bei dem zur Lenkung eines Anhängers (44) ohne lenkbare Achsen die Bremse (12a, 12b, 12c, 12d) wenigstens eines kurveninneren oder kurvenäußeren Rades (16c, 16d, 16e, 16f) wenigstens einer Achse (11a, 11b) des Anhängers (44) so abgebremst wird, dass beim Rückwärtsrangieren der Anhänger (44) zusammen mit dem automatisch gelenkten Zugfahrzeug (41) in dem Fahrschläuch (37) bis zum Zielort (36) fährt.

7. Verfahren nach Anspruch 5, bei dem zur Lenkung eines Anhängers (8) mit wenigstens einer mittels einer Deichsel (13) lenkbaren Vorderachse (9) sowie wenigstens einer ungelenkten Hinterachse (11) die Bremse (10a, 10b) wenigstens eines kurvenäußeren oder kurveninneren Rades (16a, 16b) wenigstens einer der gelenkten Achsen (9) des Anhängers (8) und/oder die Bremse (12a, 12b). wenigstens eines kurveninneren oder kurvenäußeren Rades (16c, 16d) wenigstens einer der ungelenkten Hinterachsen (11) so abgebremst werden, dass beim Rückwärtsrangieren der Anhänger (8) zusammen mit dem automatisch gelenkten Zugfahrzeug (2) in dem Fahrschlauch (37) bis zum Zielort (36) fährt.

8. Steuersystem zur Steuerung des Rückwärtsrangierens eines Gespannfahrzeugs (1, 40), bestehend aus einem Zugfahrzeug (2, 41) mit wenigstens einer automatisch lenkbaren Vorderachse (3) und mit wenigstens einer ungelenkten Hinterachse (5), sowie mit einem mit dem Zugfahrzeug (2, 41) gelenkig gekoppelten Anhänger (8, 44),
aufweisend wenigstens eine Rückfahrkamera (27) im Heckbereich (21) des Anhängers (8, 44),
ein durch eine Bedienungsperson (38) bedienbares, einen Bildschirm (19) aufweisendes Eingabe- und Anzeigegerät (18),
und eine mit der Eingabe- und Anzeigegerät (18) funktional verbundene Regel- und Steuerelektronik (7),
wobei die Rückfahrkamera (27) dazu eingerichtet ist, ein Kamerabild zum Eingabe- und Anzeigegerät (18) zu übertragen,
das Eingabe- und Anzeigegerät (18) dazu eingerichtet ist, das Kamerabild auf dem Bildschirm (19) abzubilden, durch die Bedienungsperson (18) eingebbare Zielortdaten aufzunehmen sowie zur Regel- und Steuerelektronik (7) zu übertragen, und die Regel- und Steuerelektronik (7) dazu eingerichtet ist,
- aus Positionsdaten des Gespannfahrzeugs (1, 40) relativ zu dem in das Eingabe- und Anzeigegerät (18) eingegebenen Zielort (36),
sowie aus durch Sensoren (24, 25, 26, 43, 54) bestimmten Fahrzeugdaten, wie dem aktuellen Lenkwinkel der lenkbaren Vorderachse (3) des Zugfahrzeugs (2, 41), dem aktuellen Knickwinkel einer Deichsel (13) des Anhängers (8, 44) relativ zum Zugfahrzeug (2, 41) und/oder dem aktuellen Knickwinkel des Anhängers (8, 44) relativ zum Zugfahrzeug (2, 41) und/oder zur Deichsel (13),
einen zielführenden Fahrschlauch (37) zu berechnen sowie dessen Graphikinformationen zum Eingabe- und Anzeigegerät (18) zu übertragen,
bei dem das Eingabe- und Anzeigegerät (18) dazu eingerichtet ist, ein Bild (37a) des zielführenden Fahrschlauchs (37) dem Kamerabild auf dem Bildschirm (19) maßstabgetreu so zu überlagern, dass das Bild (37a) des Fahrschlauchs (37) und das Kamerabild gleichzeitig sichtbar sind,
und bei dem die Regel- und Steuerelektronik (7) dazu eingerichtet ist, die notwendigen Lenkbefehle für einen Lenkaktuator (23) der lenkbaren Vorderachse (3) des Zugfahrzeugs (2, 41) zu berechnen,
sowie die Ansteuerung des Lenkaktuators (23) in der Weise durchzuführen, dass das Gespannfahrzeug (1, 40) beim Rückwärtsrangieren automatisch in dem Fahrschlauch (37) bis zum eingegebenen Zielort (36) fährt,
**dadurch gekennzeichnet, dass**
der gelenkig gekoppelte Anhänger (8, 44) einseitig abbremsbare Räder (16a, 16b, 16c, 16d, 16e, 16f) zum automatischen Lenken desselben aufweist, und
die Regel- und Steuerelektronik (7) dazu eingerichtet ist,
- die Lenkbremsbefehle für die Bremsen (10a, 10b, 12a, 12b, 12c, 12d) an den Rädern (16a, 16b, 16c, 16d, 16e, 16f) des Anhängers (8, 44) zu berechnen, und
- zusätzlich zur Ansteuerung des Lenkaktuators (23) die Ansteuerung der Bremsen (12a, 12b, 12c, 12d) an den Rädern (16a, 16b, 16c, 16d, 16e, 16f) des Anhängers (8, 44) in der Weise durchzuführen, dass das Gespannfahrzeug (1, 40) beim Rückwärtsrangieren automatisch in dem Fahrschlauch (37) bis zum eingegebenen Zielort (36) fährt, und
- auf dem Bildschirm (19) des Eingabe- und Anzeigegeräts (18) Bereiche zu kennzeichnen, die außerhalb des maximalen Lenkeinschlags des Gespannfahrzeugs (1, 40) liegen und somit aus der aktuellen Position des Gespannfahrzeugs (1, 40) nicht erreichbar sind.

9. Steuersystem nach Anspruch 8, **dadurch gekennzeichnet, dass** das Eingabe- und Anzeigegerät (18) dazu eingerichtet ist, Korrekturen oder Änderungen am zielführenden Fahrschlauch (37) durch manuelle Eingabe zu empfangen, wenn auf dem Bildschirm (19) während des Rückwärtsrangierens Abweichungen des Fahrschlauchs (37) vom eingegebenen Zielort (36) erkannt werden oder Änderungen des Zielorts (36) vorgenommen werden sollen, dass die Regel- und Steuerelektronik (7) dazu eingerichtet ist, diese Korrekturen oder Änderungen in das Bild (37a) des Fahrschlauchs (37), in die Darstellung (36a) des Zielorts (36) und in die daraus folgenden Lenkbefehle für den Lenkaktuator (23) der lenkbaren Vorderachse (3) des Zugfahrzeugs (2, 41) und für die Lenkbremsbefehle für die Bremsen an den Rädern (16a, 16b, 16c, 16d, 16e, 16f) des Anhängers (8, 44) einzubeziehen, um das Gespannfahrzeug (1, 40) automatisch exakt zum Zielort (36) zu dirigieren.

10. Steuersystem nach Anspruch 8 oder 9, **dadurch gekennzeichnet, dass** an einer Gangschaltvorrichtung ein Gangschaltsensor (54) angeordnet ist, der beim Einlegen des Rückwärtsgangs ein Signal an das Eingabe- und Anzeigegerät (18) sowie an die Regel- und Steuerelektronik (7) zum Einleiten des Rückwärtsrangiervorgangs generiert.

11. Steuersystem nach einem der Ansprüche 8 bis 10, **dadurch gekennzeichnet, dass** die Regel- und Steuerelektronik (7) dazu eingerichtet ist, aus den übermittelten Daten zu berechnen, ob der eingegebene Zielort (36) aus der aktuellen, Position des Gespannfahrzeugs (1, 40) erreichbar ist, und wenn dies nicht der Fall ist, eine Anzeige auf dem Bildschirm (19) des Eingabe- und Anzeigegeräts (18) zu generieren, aus der hervorgeht, ob und in welchem Umfang die Position des Gespannfahrzeugs (1, 40) zu verändern ist, um den eingegebenen Zielort (36) automatisch anzufahren.

12. Steuersystem nach einem der Ansprüche 8 bis 11, **dadurch gekennzeichnet, dass** der an das Zugfahrzeug (2, 41) angekoppelte Anhänger (8, 44) ein elektronisches Bremssystem (33) aufweist, welches direkt oder über ein anhängerseitiges Steuergerät (35) von der Regel- und Steuerelektronik (7) mit Lenkbremsbefehle für die Bremsen (10a, 10b, 12a, 12b, 12c, 12d) der Räder (16a, 16b, 16c, 16d, 16e, 16f) des Anhängers (8, 44) versorgbar ist, welche entsprechend einer mit dem zielführenden Fahrschlauch (37) berechneten Richtungsvorgabe erzeugt wurden, und dass das elektronische Bremssystem (33) derart eingerichtet ist, das mit diesem die Bremse (10a, 10b, 12a, 12b, 12c, 12d) wenigstens eines Rades (16a, 16b, 16c, 16d, 16e, 16f) einer Seite wenigstens einer Achse (9,11, 11a, 11 b) des Anhängers (8, 44) so abbremsbar ist, dass beim Rückwärtsrangieren der Anhänger (8, 44) zusammen mit dem automatisch gelenkten Zugfahrzeug (2, 41) im Fahrschlauch (37) bis zum Zielort (36) fährt.

13. Steuersystem nach Anspruch 12, **dadurch gekennzeichnet, dass** die Regel- und Steuerelektronik (7) dazu eingerichtet ist, das anhängerseitige Steuergerät (35) oder das elektronische Bremssystem (33) eines Anhängers (44) ohne lenkbare Achsen so anzusteuern, dass die Bremse (12a, 12b, 12c, 12d) wenigstens eines kurveninneren oder kurvenäußeren Rades (16c, 16d, 16e, 16f) wenigstens einer Achse (11a, 11b) des Anhängers (44) derart abgebremst wird, dass beim Rückwärtsrangieren der Anhänger (44) zusammen mit dem automatisch gelenkten Zugfahrzeug (41) im Fahrschlauch (37) bis zum Zielort (36) fährt.

14. Steuersystem nach Anspruch 12, **dadurch gekennzeichnet, dass** die Regel- und Steuerelektronik (7) dazu eingerichtet ist, das anhängerseitige Steuergerät (35) oder das elektronische Bremssystems (33) eines Anhängers (8) mit wenigstens einer mittels einer Deichsel (13) lenkbaren Vorderachse (9) sowie mit wenigstens einer ungelenkten Hinterachse (11) so anzusteuern, dass die Bremse (10a, 10b) wenigstens eines kurvenäußeren oder kurveninneren Rades (16a, 16b) wenigstens einer der gelenkten Achsen (9) und/oder die Bremse (12a, 12b) wenigstens eines kurvenäußeren oder kurveninneren Rades (16c, 16d) wenigstens einer der ungelenkten Hinterachsen (11) derart abgebremst werden, dass beim Rückwärtsrangieren der Anhänger (8) zusammen mit dem automatisch gelenkten Zugfahrzeug (2) im Fahrschlauch (37) bis zum Zielort (36) fährt.

15. Steuersystem nach einem der Ansprüche 8 bis 14, **dadurch gekennzeichnet, dass** das Eingabe- und Anzeigegerät (18) im Fahrerhaus des Zugfahrzeugs (2, 41) angeordnet oder mobil ausgebildet ist, und dass das Eingabe- und Anzeigegerät (18) über eine Leitung oder eine Funkstrecke (WLAN) mit der Steuer- und Regelelektronik (7) funktional verbunden ist.

16. Steuersystem nach einem der Ansprüche 12 bis 15, **dadurch gekennzeichnet, dass** das Steuergerät (35) in das elektronische Bremssystem (33) des Anhängers (8, 44) gerätetechnisch integriert und/oder softwarebezogen implementiert ist, und das elektronische Bremssystem (33) des Anhängers (8, 44) ein elektronisches Bremsregelsystem aufweist.

17. Steuersystem nach einem der Ansprüche 8 bis 16, **dadurch gekennzeichnet, dass** die Regel- und Steuerelektronik (7) als Zentral-Rechner-Einheit des Zugfahrzeugs (2, 41) konfiguriert ist sowie ein elektronisches Bremsregelsystem aufweist, und dazu eingerichtet ist, für das Rückwärtsrangieren des Gespannfahrzeugs (1, 40) eine Lenkstrategie für das Zugfahrzeug (1, 40) sowie eine Abbremsstrategie für den Anhänger (8, 44) zu berechnen, und die dazu eingerichtet ist, sowie das Lenken der lenkbaren Vorderachse (3) des Zugfahrzeugs (2, 41) sowie das Abbremsen einzelner Räder (16a, 16b) der wenigstens einen gelenkten Vorderachse (9) und/oder einzelner Räder (16c,16d, 16e, 16f) an der wenigstens einen ungelenkten Hinterachse (11, 11a, 11b) des Anhängers (8; 44) in der Weise anzusteuern, dass das Gespannfahrzeug (1, 40) automatisch in dem Fahrschlauch (37) bis zum eingegebenen Zielort (36) fährt.

18. Steuersystem nach einem der Ansprüche 8 bis 17, **dadurch gekennzeichnet, dass** das Eingabe- und Anzeigegerät (18) als Mobiltelefon mit einem berührungsempfindlichen Bildschirm (19), mit einer Rechnerfunktionalität, mit einer satellitengestützten Navigationsfunktion, mit Internet-Anbindung und mit Anbindung an ein lokales Funknetz (WLAN) ausgebildet ist.

19. Steuersystem nach einem der Ansprüche 8 bis 17, **dadurch gekennzeichnet, dass** das Eingabe- und Anzeigegerät (18) als tragbarer, flacher Rechner mit einem berührungsempfindlichen Bildschirm (19), mit einer Rechnerfunktionalität, mit einer satellitengestützten Navigationsfunktion, mit Internet-Anbindung und mit Anbindung an ein lokales Funknetz (WLAN) ausgebildet ist.

20. Elektronisches Bremssystem (33) zur Steuerung des Rückwärtsrangierens eines mit einem Zugfahrzeug (2, 41) gelenkig gekoppelten Anhängers (8, 44), die zusammen ein Gespannfahrzeug (1, 40) bilden, wobei das Zugfahrzeug (2, 41) wenigstens eine automatisch lenkbare Vorderachse (3) und wenigstens eine ungelenkte Hinterachse (5) aufweist,
wobei des Weiteren im Heckbereich (21) des Anhängers (8, 44) wenigstens eine Rückfahrkamera (27) angeordnet ist,
wobei die Regel- und Steuerelektronik (7) des Zugfahrzeugs (2, 41) mit einem durch eine Bedienungsperson (38) bedienbares, einen Bildschirm (19) aufweisendes Eingabe- und Anzeigegerät (18) funktional verbunden ist,
wobei die Rückfahrkamera (27) dazu eingerichtet ist, ein, Kamerabild zum Eingabe- und Anzeigegerät (18) zu übertragen,
wobei das Eingabe- und Anzeigegerät (18) dazu eingerichtet ist, das Kamerabild auf dem Bildschirm (19) abzubilden, durch die Bedienungsperson (38) eingebbare Zielortdalen aufzunehmen sowie zur Regel- und Steuerelektronik (7) zu übertragen,
wobei die Regel- und Steuerelektronik (7) dazueingerichtet ist, aus Positionsdaten des Gespanrifahrzeugs (1, 40) relativ zu den in das Eingabe- und Anzeigegerät (18) eingegebenen Zielort (36), aus durch Sensoren (24, 25, 26, 43, 54) bestimmten. Fahrieugdaten, wie dem aktuellen Lenkwinkel der lenkbaren Vorderachse (3) des Zugfahrzeugs (2, 41), dem aktuellen Knickwinkel einer Deichsel (13) des Anhängers (8) relativ zum Zugfahrzeug (2, 41) und/oder dem aktuellen Knickwinkel des Anhängers (8, 44) relativ zum Zugfahrzeug (2, 41) und/oder zur Deichsel (13) einen zielführenden Fahrschlauch (37) zu berechnen und dessen Graphikinformationen zum Eingabe- und Anzeigegerät (18) zu übertragen,
wobei das Eingabe- und Anzeigegerät (18) dazu eingerichtet ist, ein Bild (37a) des zielführenden Fahrschlauchs (37) dem Kamerabild auf dem Bildschirm (19) maßstabgetreu so zu überlagern, dass sowohl das Kamerabild als auch das Bild (37a) des Fahrschlauchs (37a) sichtbar sind,
und bei dem die Regel- und Steuerelektronik (7) dazu eingerichtet ist, die notwendigen Lenkbefehle für einen Lenkaktuator (23) der lenkbaren Vorderachse (3) des Zugfahrzeugs (2, 41) zu berechnen,
sowie die Ansteuerung des Lenkaktuators (23) in der Weise durchzuführen, dass das Gespannfahrzeug (1, 40) beim Rückwärtsrangieren automatisch in dem Fahrschlauch (37) bis zum eingegebenen Zielort (36) fährt
**dadurch gekennzeichnet, dass**
der Anhänger (8, 44) zum automatischen Lenken desselben einseitig abbremsbare Räder (16a, 16b, 16c, 16d, 16e, 16f), aufweist, und
bei dem das elektronische Bremssystem (33) des Anhängers (8, 44) zum Empfang von Lenkbremsbefehlen für abzubremsende Räder (16a, 16b, 16c, 16d, 16e, 16f) des Anhängers (8, 44) mit einer Regel- und Steuerelektronik (7) des Zugfahrzeugs (2, 41) direkt oder über ein Steuergerät (35) signaltechnisch verbunden ist, und
bei dem die Regel- und Steuerelektronik (7) dazu eingerichtet ist,
- die Lenkbremsbefehle für die Bremsen (10a, 10b, 12a, 12b, 12c, 12d) an den Rädern (16a, 16b, 16c, 16d, 16e, 16f) des Anhängers (8, 44) zu berechnen, und
- zusätzlich zur Ansteuerung des Lenkaktuators (23) die Ansteuerung der Bremsen (12a, 12b, 12c, 12d) an den Rädern (16a, 16b, 16c, 16d, 16e, 16f) des Anhängers (8, 44) in der Weise durchzuführen, dass das Gespannfahrzeug (1, 40) beim Rückwärtsrangieren automatisch in dem Fahrschlauch (37) bis zum eingegebenen Zielort (36) fährt, und
- auf dem Bildschirm (19) des Eingabe- und Anzeigegeräts (18) Bereiche zu kennzeichnen, die außerhalb des maximalen Lenkeinschlags des Gespannfahrzeugs (1, 40) liegen und somit aus der aktuellen Position des Gespannfahrzeugs (1, 40) nicht erreichbar sind.

21. Bremssystem (33) nach Anspruch 20, **dadurch gekennzeichnet, dass** das anhängerseitige Steuergerät (35) in das elektronische Bremssystem (33) des Anhängers (8, 44) gerätetechnisch integriert und/oder softwarebezogen implementiert ist, und dass das elektronische Bremssystem (33) des Anhängers ein elektronisches Bremsregelsystem ist.

## Claims

1. Method for controlling the reverse manoeuvring of a vehicle combination (1, 40) composed of a tractor vehicle (2, 41) with at least one automatically steerable front axle (3) and with at least one non-steered rear axle (5) and with a trailer (8, 44), with at least one reversing camera (27) in the rear region (21) of the trailer (8, 44), with an input and display unit (18) which can be operated by an operating person (38) and which has a screen (19) for the camera image, and with closed-loop and open-loop control electronics (7).
- in which method the closed-loop and open-loop control electronics (7) calculate a target-oriented driving path (37) from a target location (36) that can be input into the input and display unit (18) by the operating person (38),
from position data relating to the vehicle combination (1, 40) relative to the target location (36),
from vehicle data determined by way of sensors (24, 25, 26, 43, 54), such as the present steer angle of the steerable front axle (3) of the tractor vehicle (2, 41),
from the present articulation angle of a drawbar (13) of the trailer (8) relative to the tractor vehicle (2) and/or from the present articulation angle of the trailer (44) relative to the tractor vehicle (41) and/or the drawbar (13),
and transmit associated graphics information to the input and display unit (18),
- in which method the image recorded by the reversing camera (27) is transmitted to and depicted on the input and display unit (18),
- in which method the input and display unit (18) depicts, on its screen (19), the camera image with the image (37a) of the target-oriented driving path (37) superposed thereon such that the image (37a) of the driving path (37) and the camera image are visible simultaneously,
- in which method the closed-loop and open-loop control electronics (7) calculate control commands for a steering actuator (23) on the steerable front axle (3) of the tractor vehicle (2, 41),
- and in which method the closed-loop and open-loop control electronics (7) perform and/or initiate an actuation of the steering actuator (23) such that the vehicle combination (1, 40), during reverse manoeuvring, automatically travels on the driving path (37) to the input target location (36),
**characterized in that**
the trailer (8, 44) has, for the automatic steering thereof, wheels (16a, 16b, 16c, 16d, 16e, 16f) which can be braked on one side,
the closed-loop and open-loop control electronics (7) calculate steering braking commands for the brakes (10a, 10b, 12a, 12b, 12c, 12d) at the wheels (16a, 16b, 16c, 16d, 16e, 16f) of the trailer (8, 44), and
in which method the closed-loop and open-loop control electronics (7) perform and/or initiate, in addition or alternatively to the actuation of the steering actuator (23), an actuation of the brakes (10a, 10b, 12a, 12b, 12c, 12d) of the wheels (16a, 16b, 16c, 16d, 16e, 16f) of the trailer (8, 44), in such a way that the vehicle combination (1, 40), during the reverse manoeuvring, automatically travels on the driving path (37) to the input target location (36), and
in which method, by way of the closed-loop and open-loop control electronics (7), regions which lie outside the maximum steer input of the vehicle combination (1, 40), and which therefore cannot be reached from the present position of the vehicle combination (1, 40), are indicated on the screen (19) of the input and display unit (18).

2. Method according to Claim 1, in which the target-oriented driving path (37) can, in the event of deviations of the driving path (37) from the target location (36) that arise during the reverse manoeuvring, or in the event of changes to the target location (36) that arise during the reverse manoeuvring, be corrected by manual input into the input and display unit (18) in order to automatically direct the vehicle combination (1, 40) exactly to the target location (36).

3. Method according to Claim 1 or 2, in which, upon the engagement of the reverse gear, a signal is generated to the input and display unit (18) and to the closed-loop and open-loop control electronics (7) for the purposes of initiating the reverse manoeuvring process.

4. Method according to one of Claims 1 to 3, in which the closed-loop and open-loop control electronics (7) calculate, from the data transmitted thereto, whether the input target location (36) can be reached from the present position of the vehicle combination (1, 40), and if this is not the case, said closed-loop and open-loop control electronics generate, on the screen (19) of the input and display unit (18), a display which shows whether, and to what extent, the position of the vehicle combination (1, 40) must be changed in order to automatically travel to the input target location (36).

5. Method according to one of Claims 1 to 4, in which, for the steering of the trailer (8, 44), steering braking commands, calculated by the closed-loop and open-loop control electronics (7) in accordance with a direction specification calculated with the target-oriented driving path (37), for the brake (10a, 10b, 12a, 12b, 12c, 12d) of at least one wheel (16a, 16b, 16c, 16d, 16e, 16f) of the trailer (8, 44) are transmitted to an electronic brake system (33) in the trailer (8, 44) directly or via an open-loop control unit (35) in the trailer (8, 44), and in that the electronic brake system (33) brakes the brake (10a, 10b, 12a, 12b, 12c, 12d) of at least one wheel (16a, 16b, 16c, 16d, 16e, 16f) on one side of at least one axle (9, 11, 11a, 11b) of the trailer (8, 44) in such a way that, during the reverse manoeuvring, the trailer (8, 44) together with the automatically steered tractor vehicle (2, 31) travels on the driving path (37) to the target location (36).

6. Method according to Claim 5, in which, for the steering of a trailer (44) without steerable axles, the brake (12a, 12b, 12c, 12d) of at least one wheel (16c, 16d, 16e, 16f), at the inside of the bend or at the outside of the bend, of at least one axle (11a, 11b) of the trailer (44) is braked such that, during the reverse manoeuvring, the trailer (44) together with the automatically steered tractor vehicle (41) travels on the driving path (37) to the target location (36).

7. Method according to Claim 5, in which, for the steering of a trailer (8) with at least one front axle (9) which can be steered by way of a drawbar (13) and with at least one non-steered rear axle (11), the brake (10a, 10b) of at least one wheel (16a, 16b), at the inside of the bend or at the outside of the bend, of at least one of the steered axles (9) of the trailer (8) and/or the brake (12a, 12b) of at least one wheel (16c, 16d), at the inside of the bend or at the outside of the bend, of at least one of the non-steered rear axles (11) are braked such that, during the reverse manoeuvring, the trailer (8) together with the automatically steered tractor vehicle (2) travels on the driving path (37) to the target location (36).

8. Open-loop control system for the open-loop control of the reverse manoeuvring of a vehicle combination (1, 40) composed of a tractor vehicle (2, 41) with at least one automatically steerable front axle (3) and with at least one non-steered rear axle (5) and with a trailer (8, 44) which is articulatedly coupled to the tractor vehicle (2, 41),
having at least one reversing camera (27) in the rear region (21) of the trailer (8, 44),
an input and display unit (18) which can be operated by an operating person (38) and which has a screen (19),
and closed-loop and open-loop control electronics (7) which are functionally connected to the input and display unit (18),
wherein the reversing camera (27) is designed to transmit a camera image to the input and display unit (18),
the input and display unit (18) is designed to depict the camera image on the screen (19) and to record target location data that can be input by the operating person (18) and to transmit said target location data to the closed-loop and open-loop control electronics (7),
and the closed-loop and open-loop control electronics (7) are designed to calculate a target-oriented driving path (37)
- from position data relating to the vehicle combination (1, 40) relative to the target location (36) input into the input and display unit (18)
and from vehicle data determined by way of sensors (24, 25, 26, 43, 54), such as the present steer angle of the steerable front axle (3) of the tractor vehicle (2, 41), from the present articulation angle of a drawbar (13) of the trailer (8, 44) relative to the tractor vehicle (2, 41) and/or from the present articulation angle of the trailer (8, 44) relative to the tractor vehicle (2, 41) and/or relative to the drawbar (13),
and to transmit the graphics information relating thereto to the input and display unit (18),
in which open-loop control system the input and display unit (18) is designed to superpose an image (37a) of the target-oriented driving path (37), true to scale, on the camera image on the screen (19) such that the image (37a) of the driving path (37) and the camera image are visible simultaneously,
and in which open-loop control system the closed-loop and open-loop control electronics (7) are designed to calculate the necessary steering commands for a steering actuator (23) of the steerable front axle (3) of the tractor vehicle (2, 41),
and to perform the actuation of the steering actuator (23) in such a way that the vehicle combination (1, 40), during the reverse manoeuvring, automatically travels on the driving path (37) to the input target location (36),
**characterized in that**
the articulatedly coupled trailer (8, 44) has, for the automatic steering thereof, wheels (16a, 16b, 16c, 16d, 16e, 16f) which can be braked on one side, and
the closed-loop and open-loop control electronics (7) are designed
- to calculate the steering braking commands for the brakes (10a, 10b, 12a, 12b, 12c, 12d) at the wheels (16a, 16b, 16c, 16d, 16e, 16f) of the trailer (8, 44) and
- to perform, in addition to the actuation of the steering actuator (23), the actuation of the brakes (12a, 12b, 12c, 12d) at the wheels (16a, 16b, 16c, 16d, 16e, 16f) of the trailer (8, 44), in such a way that the vehicle combination (1, 40), during the reverse manoeuvring, automatically travels on the driving path (37) to the input target location (36), and
- to indicate, on the screen (19) of the input and display unit (18), regions which lie outside the maximum steer input of the vehicle combination (1, 40), and which therefore cannot be reached from the present position of the vehicle combination (1, 40).

9. Open-loop control system according to Claim 8, **characterized in that** the input and display unit (18) is designed to receive corrections or changes to the target-oriented driving path (37) by way of manual input if, on the screen (19) during the reverse manoeuvring, deviations of the driving path (37) from the input target location (36) are detected or changes to the target location (36) are to be performed, **in that** the closed-loop and open-loop control electronics (7) are designed to incorporate said corrections or changes into the image (37a) of the driving path (37), into the depiction (36a) of the target location (36) and into the resulting steering commands for the steering actuator (23) of the steerable front axle (3) of the tractor vehicle (2, 41) and for the steering braking commands for the brakes at the wheels (16a, 16b, 16c, 16d, 16e, 16f) of the trailer (8, 44), in order to automatically direct the vehicle combination (1, 40) exactly to the target location (36).

10. Open-loop control system according to Claim 8 or 9, **characterized in that**, on a gearshift device, there is arranged a gearshift sensor (54) which, upon engagement of the reverse gear, generates a signal to the input and display unit (18) and to the closed-loop and open-loop control electronics (7) for the purposes of initiating the reverse manoeuvring process.

11. Open-loop control system according to one of Claims 8 to 10, **characterized in that** the closed-loop and open-loop control electronics (7) are designed to calculate, from the transmitted data, whether the input target location (36) can be reached from the present position of the vehicle combination (1, 40), and if this is not the case, to generate, on the screen (19) of the input and display unit (18), a display which shows whether, and to what extent, the position of the vehicle combination (1, 40) must be changed in order to automatically travel to the input target location (36).

12. Open-loop control system according to one of Claims 8 to 11, **characterized in that** the trailer (8, 44) coupled to the tractor vehicle (2, 41) has an electronic brake system (33) to which steering braking commands, which have been generated in accordance with a direction specification calculated with the target-oriented driving path (37), for the brakes (10a, 10b, 12a, 12b, 12c, 12d) of the wheels (16a, 16b, 16c, 16d, 16e, 16f) of the trailer (8, 44) can be supplied from the closed-loop and open-loop control electronics (7) directly or via a trailer-side control unit (35), and **in that** the electronic brake system (33) is designed such that, by way of said electronic brake system, the brake (10a, 10b, 12a, 12b, 12c, 12d) of at least one wheel (16a, 16b, 16c, 16d, 16e, 16f) on one side at least one axle (9, 11, 11a, 11b) of the trailer (8, 44) can be braked in such a way that, during the reverse manoeuvring, the trailer (8, 44) together with the automatically steered tractor vehicle (2, 41) travels on the driving path (37) to the target location (36).

13. Open-loop control system according to Claim 12, **characterized in that** the closed-loop and open-loop control electronics (7) are designed to actuate the trailer-side control unit (35) or the electronic brake system (33) of a trailer (44) without steerable axles such that the brake (12a, 12b, 12c, 12d) of at least one wheel (16c, 16d, 16e, 16f), at the inside of the bend or at the outside of the bend, of at least one axle (11a, 11b) of the trailer (44) is braked such that, during the reverse manoeuvring, the trailer (44) together with the automatically steered tractor vehicle (41) travels on the driving path (37) to the target location (36).

14. Open-loop control system according to Claim 12, **characterized in that** the closed-loop and open-loop control electronics (7) are designed to actuate the trailer-side control unit (35) or the electronic brake system (33) of a trailer (8), which has at least one front axle (9) which can be steered by way of a drawbar (13) and at least one non-steered rear axle (11), such that the brake (10a, 10b) of at least one wheel (16a, 16b), at the inside of the bend or at the outside of the bend, of at least one of the steered axles (9) and/or the brake (12a, 12b) of at least one wheel (16c, 16d), at the inside of the bend or at the outside of the bend, of at least one of the non-steered rear axles (11) are braked such that, during the reverse manoeuvring, the trailer (8) together with the automatically steered tractor vehicle (2) travels on the driving path (37) to the target location (36).

15. Open-loop control system according to one of Claims 8 to 14, **characterized in that** the input and display unit (18) is arranged in the driver's cab of the tractor vehicle (2, 41) or so as to be mobile, and **in that** the input and display unit (18) is functionally connected to the open-loop and closed-loop control electronics (7) via a line or a radio link (WLAN).

16. Open-loop control system according to one of Claims 12 to 15, **characterized in that** the control unit (35) is integrated in terms of hardware, and/or is implemented in terms of software, in the electronic brake system (33) of the trailer (8, 44), and the electronic brake system (33) of the trailer (8, 44) has an electronic closed-loop brake control system.

17. Open-loop control system according to one of Claims 8 to 16, **characterized in that** the closed-loop and open-loop control electronics (7) are configured as a central computer unit of the tractor vehicle (2, 41) and have an electronic closed-loop brake control system, and are designed to calculate, for the reverse manoeuvring of the vehicle combination (1, 40), a steering strategy for the tractor vehicle (1, 40) and a braking strategy for the trailer (8, 44), and which are designed to actuate the steering of the steerable front axle (3) of the tractor vehicle (2, 41) and the braking of individual wheels (16a, 16b) of the at least one steered front axle (9) and/or individual wheels (16c, 16d, 16e, 16f) on the at least one non-steered rear axle (11, 11a, 11b) of the trailer (8, 44) in such a way that the vehicle combination (1, 40) automatically travels on the driving path (37) to the input target location (36).

18. Open-loop control system according to one of Claims 8 to 17, **characterized in that** the input and display unit (18) is in the form of a mobile telephone with a touch-sensitive screen (19), with a computer functionality, with a satellite-based navigation function, with an Internet connection and with a connection to a local radio network (WLAN).

19. Open-loop control system according to one of Claims 8 to 17, **characterized in that** the input and display unit (18) is in the form of a portable tablet computer with a touch-sensitive screen (19), with a computer functionality, with a satellite-based navigation function, with an Internet connection and with a connection to a local radio network (WLAN).

20. Electronic brake system (33) for the open-loop control of the reverse manoeuvring of a trailer (8, 44) articulatedly coupled to a tractor vehicle (2, 41), which tractor vehicle and trailer together form a vehicle combination (1, 40), wherein the tractor vehicle (2, 41) has at least one automatically steerable front axle (3) and at least one non-steered rear axle (5),
wherein, furthermore, at least one reversing camera (27) is arranged in the rear region (21) of the trailer (8, 44),
wherein the closed-loop and open-loop control electronics (7) of the tractor vehicle (2, 41) are functionally connected to an input and display unit (18) which can be operated by an operating person (38) and which has a screen (19),
wherein the reversing camera (27) is designed to transmit a camera image to the input and display unit (18),
wherein the input and display unit (18) is designed to depict the camera image on the screen (19) and to record target location data that can be input by the operating person (38) and to transmit said target location data to the closed-loop and open-loop control electronics (7),
wherein the closed-loop and open-loop control electronics (7) are designed to calculate a target-oriented driving path (37) from position data relating to the vehicle combination (1, 40) relative to the target location (36) input into the input and display unit (18) and from vehicle data determined by way of sensors (24, 25, 26, 43, 54), such as the present steer angle of the steerable front axle (3) of the tractor vehicle (2, 41), from the present articulation angle of a drawbar (13) of the trailer (8) relative to the tractor vehicle (2, 41) and/or from the present articulation angle of the trailer (8, 44) relative to the tractor vehicle (2, 41) and/or relative to the drawbar (13), and to transmit the graphics information relating thereto to the input and display unit (18),
wherein the input and display unit (18) is designed to superpose an image (37a) of the target-oriented driving path (37), true to scale, on the camera image on the screen (19) such that both the camera image and the image (37a) of the driving path (37) are visible,
and in which electronic brake system the closed-loop and open-loop control electronics (7) are designed to calculate the necessary steering commands for a steering actuator (23) of the steerable front axle (3) of the tractor vehicle (2, 41),
and to perform the actuation of the steering actuator (23) in such a way that the vehicle combination (1, 40), during the reverse manoeuvring, automatically travels on the driving path (37) to the input target location (36),
**characterized in that**
the trailer (8, 44) has, for the automatic steering thereof, wheels (16a, 16b, 16c, 16d, 16e, 16f) which can be braked on one side, and
wherein the electronic brake system (33) of the trailer (8, 44) is, for receiving steering braking commands for wheels (16a, 16b, 16c, 16d, 16e, 16f), which are to be braked, of the trailer (8, 44), connected in terms of signal transmission to closed-loop and open-loop control electronics (7) of the tractor vehicle (2, 41), directly or via a control unit (35), and
wherein the closed-loop and open-loop control electronics (7) are designed
- to calculate the steering braking commands for the brakes (10a, 10b, 12a, 12b, 12c, 12d) at the wheels (16a, 16b, 16c, 16d, 16e, 16f) of the trailer (8, 44) and
- to perform, in addition to the actuation of the steering actuator (23), the actuation of the brakes (12a, 12b, 12c, 12d) at the wheels (16a, 16b, 16c, 16d, 16e, 16f) of the trailer (8, 44), in such a way that the vehicle combination (1, 40), during the reverse manoeuvring, automatically travels on the driving path (37) to the input target location (36), and
- to indicate, on the screen (19) of the input and display unit (18), regions which lie outside the maximum steer input of the vehicle combination (1, 40), and which therefore cannot be reached from the present position of the vehicle combination (1, 40).

21. Brake system (33) according to Claim 20, **characterized in that** the trailer-side control unit (35) is integrated in terms of hardware, and/or is implemented in terms of software, in the electronic brake system (33) of the trailer (8, 44), and the electronic brake system (33) of the trailer is an electronic closed-loop brake control system.

## Revendications

1. Procédé de commande de la manoeuvre en marche arrière d'un véhicule attelé (1, 40), constitué d'un véhicule tracteur (2, 41) comportant au moins un essieu avant (3) orientable automatiquement et comportant au moins un essieu arrière non orienté (5) et une remorque (8, 44), comportant au moins une caméra de recul (27) à l'arrière (21) de la remorque (8, 44), comportant un appareil d'entrée et d'affichage (38) pouvant être manipulé par un opérateur (18) muni d'un écran (19) destiné à l'image de la caméra, et comportant une électronique de régulation et de commande (7),
- dans lequel l'électronique de régulation et de commande (7) calcule à partir d'un point de destination (36) pouvant être saisi par l'opérateur (38) sur l'appareil d'entrée et d'affichage (18),
à partir de données de position du véhicule attelé (1, 40) par rapport au point de destination (36),
à partir de données de véhicule déterminées au moyen de capteurs (24, 25, 26, 43, 54), telles que l'angle de braquage actuel de l'essieu avant orientable (3) du véhicule tracteur (2, 41),
à partir de l'angle de pivotement actuel d'une barre d'attelage (13) de la remorque (8) par rapport au véhicule tracteur (2) et/ou à partir de l'angle de pivotement actuel de la remorque (44) par rapport au véhicule tracteur (41) et/ou à la barre d'attelage attelé (13),
une trajectoire de véhicule efficace (37) et transmet des informations graphiques correspondantes à l'appareil d'entrée et d'affichage (18),
- dans lequel l'image acquise par la caméra de recul (27) est transmise à l'appareil d'entrée et d'affichage (18) et y est représentée,
- dans lequel l'appareil d'entrée et d'affichage (18) représente sur son écran (19) de manière superposée l'image de caméra à travers l'image (37a) de la trajectoire de véhicule efficace (37) de manière à ce que l'image (37a) de la trajectoire de véhicule (37) et l'image de caméra soient visibles simultanément,
- dans lequel l'électronique de régulation et de commande (7) calcule des ordres de commande destinés à un actionneur de braquage (23) sur l'essieu avant orientable (3) du véhicule tracteur (2, 41),
- et dans lequel l'électronique de régulation et de commande (7) exécute et/ou déclenche une commande de l'actionneur de braquage (23) de manière à ce que le véhicule attelé (1, 40) se déplace automatiquement lors d'une manoeuvre en marche arrière suivant la trajectoire de déplacement (37) vers le point de destination (36) fourni en entrée,
**caractérisé en ce que**
la remorque (8, 44) comporte des roues (16a, 16b, 16c, 16d, 16e, 16f) pouvant être soumises à un freinage unilatéral permettant de la manoeuvrer automatiquement, l'électronique de régulation et de commande (7) calcule des ordres de freinage de manoeuvre pour les freins (10a, 10b, 12a, 12b, 12c, 12d) sur les roues (16a, 16b, 16c, 16d, 16e, 16f) de la remorque (8, 44), et
dans lequel l'électronique de régulation et de commande (7) exécute et/ou déclenche en outre ou en variante par rapport à la commande de l'actionneur de braquage (23) une commande des freins (10a, 10b, 12a, 12b, 12c, 12d) des roues (16a, 16b, 16c, 16d, 16e, 16f) de la remorque (8, 44) de manière à ce que le véhicule attelé (1, 40) se déplace automatiquement suivant la trajectoire de déplacement (37) vers le point de destination (36) fourni en entrée lors d'une manoeuvre en marche arrière, et
dans lequel des régions qui se situent au-delà de l'angle de braquage maximal du véhicule attelé (1, 40) et qui ne peuvent donc pas être atteintes à partir de la position actuelle du véhicule attelé (1, 40) sont identifiées sur l'écran (19) de l'appareil d'entrée et d'affichage (18) par l'électronique de régulation et de commande (7).

2. Procédé selon la revendication 1, dans lequel la trajectoire de déplacement efficace (37) peut être corrigée lors d'écarts de la trajectoire de déplacement (37) par rapport au point de destination (36) se produisant pendant la manoeuvre en marche arrière ou lors de modifications du point de destination (36) se produisant pendant la manoeuvre en marche arrière par une saisie manuelle sur l'appareil d'entrée et d'affichage (18) afin de diriger automatiquement le véhicule attelé (1, 40) exactement vers le point de destination (36).

3. Procédé selon la revendication 1 ou 2, dans lequel, lors de l'engagement de la manoeuvre en marche arrière, un signal est généré sur l'appareil d'entrée et d'affichage (18) et sur l'électronique de régulation et de commande (7) pour déclencher le processus de manoeuvre en marche arrière.

4. Procédé selon l'une quelconque des revendications 1 à 3, dans lequel l'électronique de régulation et de commande (7) calcule à partir des données qui lui sont transmises si le point de destination (36) fourni en entrée peut être atteint à partir de la position actuelle du véhicule attelé (1, 40) et lorsque cela n'est pas le cas, génère sur l'écran (19) de l'appareil d'entrée et d'affichage (18) un affichage indiquant si et dans quelle mesure la position du véhicule attelé (1, 40) doit être modifiée afin de permettre un déplacement automatique vers le point de destination (36) fourni en entrée.

5. Procédé selon l'une quelconque des revendications 1 à 4, dans lequel, pour la manoeuvre de la remorque (8, 44) d'une manière qui correspond à un ordre de direction calculé au moyen de la trajectoire de déplacement efficace (37), des ordres de freinage de manoeuvre calculés par l'électronique de régulation et de commande (7) pour les freins (10a, 10b, 12a, 12b, 12c, 12d) d'au moins une roue (16a, 16b, 16c, 16d, 16e, 16f) de la remorque (8, 44) sont envoyés directement ou par l'intermédiaire d'un appareil de commande (35) se trouvant dans la remorque (8, 44) à un système de freinage électronique (33) se trouvant dans la remorque (8, 44) et de manière à ce que le système de freinage électronique (33) actionne les freins (10a, 10b, 12a, 12b, 12c, 12d) d'au moins une roue (16a, 16b, 16c, 16d, 16e, 16f) d'un côté d'au moins un essieu (9, 11, 11a, 11b) de la remorque (8, 44) afin que, lors d'une manoeuvre en marche arrière, la remorque (8, 44) se déplace en association avec le véhicule tracteur (2, 31) manoeuvré automatiquement suivant la trajectoire de déplacement (37) jusqu'au point de destination (36).

6. Procédé selon la revendication 5, dans lequel, pour la manoeuvre d'une remorque (44) ne comportant pas d'essieux orientables, les freins (12a, 12b, 12c, 12d) d'au moins une roue intérieure au virage ou extérieure au virage (16c, 16d, 16e, 16f) d'au moins un essieu (11a, 11b) de la remorque (44) sont actionnés de manière à ce que, lors de manoeuvres en marche arrière, la remorque (44) se déplace en association avec le véhicule tracteur (41) manoeuvré automatiquement suivant la trajectoire de déplacement (37) jusqu'au point de destination (36).

7. Procédé selon la revendication 5, dans lequel, pour la manoeuvre d'une remorque (8) comportant au moins un essieu avant (9) orientable au moyen d'une barre d'attelage attelé (13) et au moins un essieu arrière non orienté (11), les freins (10a, 10b) d'au moins une roue (16a, 16b) extérieure au virage ou intérieure au virage d'au moins l'un des essieux orientés (9) de la remorque (8) et/ou les freins (12a, 12b) d'au moins une roue (16c, 16d) intérieure au virage ou extérieure au virage d'au moins l'un des essieux arrières non orientés (11) sont actionnés de manière à ce que, lors de manoeuvres en marche arrière, la remorque (8) se déplace en association avec le véhicule tracteur (2) manoeuvré automatiquement suivant la trajectoire de déplacement (37) jusqu'au point de destination (36).

8. Système de commande destiné à commander la manoeuvre en marche arrière d'un véhicule attelé (1, 40), constitué d'un véhicule tracteur (2, 41) comportant au moins un essieu avant (3) orientable automatiquement et au moins un essieu arrière non orienté (5), et comportant une remorque (8, 44) accouplée de manière articulée au véhicule tracteur (2, 41),
comportant au moins une caméra de recul (27) à l'arrière (21) de la remorque (8, 44),
un appareil d'entrée et d'affichage (18) pouvant être manipulé par un opérateur (38) et comportant un écran (19),
et une électronique de régulation et de commande (7) fonctionnellement connectée à l'appareil d'entrée et d'affichage (18),
dans lequel la caméra de recul (27) est conçue pour transmettre une image de caméra à l'appareil d'entée et d'affichage (18),
l'appareil d'entrée et d'affichage (18) est conçu pour former l'image de caméra sur l'écran (19), pour acquérir des données de destination pouvant être fournis en entrée par l'opérateur (18) et pour les transmettre à l'électronique de régulation et de commande (7),
et l'électronique de régulation et de commande (7) est conçue pour calculer,
- à partir de données de position du véhicule attelé (1, 40) par rapport au point de destination (36) fourni en entrée sur l'appareil d'entrée et d'affichage (18), et de données de véhicule déterminées par des capteurs (24, 25, 26, 43, 54), telles que l'angle de braquage actuel de l'essieu avant orientable (3) du véhicule tracteur (2, 41), l'angle de pivotement actuel d'une barre d'attelage (13) de la remorque (8, 44) par rapport au véhicule tracteur (2, 41) et/ou l'angle de pivotement actuel de la remorque (8, 44) par rapport au véhicule tracteur (2, 41) et/ou par rapport à la barre du véhicule attelé (13),
une trajectoire de déplacement efficace (37) et pour transmettre les informations graphiques qui lui correspondent à l'appareil d'entrée et d'affichage (18),
dans lequel l'appareil d'entrée et d'affichage (18) est conçu pour superposer à la même échelle une image (37a) de la trajectoire de déplacement efficace (37) à l'image de caméra sur l'écran (19) de manière à ce que l'image (37a) de la trajectoire de déplacement (37) et l'image de la caméra puissent être visibles simultanément,
et dans lequel l'électronique de régulation et de commande (7) est conçue pour calculer les ordres de braquage nécessaires pour un actionneur de braquage (23) de l'essieu avant orientable (3) du véhicule tracteur (2, 41),
et pour exécuter la commande de l'actionneur de braquage (23) de manière à ce que le véhicule attelé (1, 40) se déplace automatiquement, lors de manoeuvres en marche arrière, suivant la trajectoire de déplacement (37) jusqu'au point de destination (36) fourni en entrée,
**caractérisé en ce que**
la remorque (8, 44) accouplée de manière articulée comporte des roues (16a, 16b, 16c, 16d, 16e, 16f) pouvant être soumises à un freinage unilatéral permettant de la manoeuvrer automatiquement, et l'électronique de régulation et de commande (7) est conçue pour
- calculer les ordres de freinage de manoeuvre pour les freins (10a, 10b, 12a, 12b, 12c, 12d) sur les roues (16a, 16b, 16c, 16d, 16e, 16f) de la remorque (8, 44), et
- en plus de la commande de l'actionneur de braquage (23), pour exécuter la commande des freins (12a, 12b, 12c, 12d) sur les roues (16a, 16b, 16c, 16d, 16e, 16f) de la remorque (8, 44) de manière à ce que le véhicule attelé (1, 40) se déplace automatiquement, lors de manoeuvres en marche arrière, suivant la trajectoire de déplacement (37) jusqu'au point de destination (36) fourni en entrée,
- pour identifier sur l'écran (19) de l'appareil d'entrée et d'affichage (18) des régions qui se situent au-delà de l'angle de braquage maximal du véhicule attelé (1, 40) et qui ne peuvent donc pas être atteintes à partir de la position actuelle du véhicule attelé (1, 40).

9. Système de commande selon la revendication 8, **caractérisé en ce que** l'appareil d'entrée et d'affichage (18) est conçu pour recevoir des corrections ou des modifications apportées à la trajectoire de déplacement efficace (37) par une saisie manuelle lorsque des écarts de la trajectoire de déplacement (37) par rapport au point de destination (36) fourni en entrée sont détectés sur l'écran (19) pendant la manoeuvre en marche arrière ou lorsque des modifications du point de destination (36) doivent être effectuées, et l'électronique de régulation et de commande (7) est conçue pour inclure lesdites corrections ou modifications dans l'image (37a) de la trajectoire de déplacement (37), dans la représentation (36a) du point de destination (36) et dans les ordres de manoeuvre qui s'ensuivent pour l'actionneur de braquage (23) de l'essieu avant orientable (3) du véhicule tracteur (2, 41) et pour les ordres de freinage de manoeuvre sur les roues (16a, 16b, 16c, 16d, 16e, 16f) de la remorque (8, 44), afin de diriger automatiquement le véhicule attelé (1, 40) exactement vers le point de destination (36).

10. Système de commande selon la revendication 8 ou 9, **caractérisé en ce qu'**il est prévu sur un dispositif de changement de vitesse, un capteur de changement de vitesse (54) qui génère, lors de l'engagement de la marche arrière, un signal sur l'appareil d'entrée et d'affichage (18) ainsi que sur l'électronique de régulation et de commande (7) pour le déclenchement du processus de manoeuvre en marche arrière.

11. Système de commande selon l'une quelconque des revendications 8 à 10, **caractérisé en ce que** l'électronique de régulation et de commande (7) est conçue pour calculer, à partir des données transmises, si le point de destination (36) fourni en entrée peut être atteint à partir de la position actuelle du véhicule attelé (1, 40), et lorsque cela n'est pas le cas, pour générer un affichage sur l'écran (19) de l'appareil d'entrée et d'affichage (18) indiquant si et dans quelle mesure la position du véhicule attelé (1, 40) doit être modifiée afin de permettre un déplacement automatique vers le point de destination (36) fourni en entrée.

12. Système de commande selon l'une quelconque des revendications 8 à 11, **caractérisé en ce que** la remorque (8, 44) accouplée au véhicule tracteur (2, 41) comporte un système de freinage électronique (33) auquel peuvent être fournis par l'électronique de régulation et de commande (7), directement ou par l'intermédiaire d'un appareil de commande (35) côté remorque, des ordres de freinage de manoeuvre destinés aux freins (10a, 10b, 12a, 12b, 12c, 12d) des roues (16a, 16b, 16c, 16d, 16e, 16f) de la remorque (8, 44), qui ont été générés d'une manière qui correspond à un ordre de direction calculé au moyen de la trajectoire de déplacement efficace (37), et **en ce que** le système de freinage électronique (33) est conçu de manière à ce que, au moyen de celui-ci, les freins (10a, 10b, 12a, 12b, 12c, 12d) d'au moins une roue (16a, 16b, 16c, 16d, 16e, 16f) d'un côté d'au moins un essieu (9, 11, 11a, 11b) de la remorque (8, 44) puissent être actionnés afin que, lors de manoeuvres en marche arrière, la remorque (8, 44) se déplace en association avec le véhicule tracteur (2, 41) manoeuvré automatiquement suivant la trajectoire de déplacement (37) jusqu'au point de destination (36).

13. Système de commande selon la revendication 12, **caractérisé en ce que** l'électronique de régulation et de commande (7) est conçue pour commander l'appareil de commande côté remorque (35) ou le système de freinage électronique (33) d'une remorque (44) sans essieux orientables de manière à ce que les freins (12a, 12b, 12c, 12d) d'au moins une roue orientée intérieure au virage ou extérieure au virage (16c, 16d, 16e, 16f) d'au moins un essieu (11a, 11b) de la remorque (44) puissent être actionnés afin que, lors de manoeuvres en marche arrière, la remorque (44) se déplace en association avec le véhicule tracteur (41) manoeuvré automatiquement suivant la trajectoire de déplacement (37) jusqu'au point de destination (36).

14. Système de commande selon la revendication 12, **caractérisé en ce que** l'électronique de régulation et de commande (7) est conçue pour commander l'appareil de commande côté remorque (35) ou le système de freinage électronique (33) d'une remorque (8) comportant au moins un essieu avant (9) orientable au moyen d'une barre d'attelage (13) et comportant au moins un essieu arrière non orienté (11) de manière à ce que les freins (10a, 10b) d'au moins une roue (16a, 16b) extérieure au virage ou intérieure au virage d'au moins l'un des essieux orientés (9) et/ou à ce que les freins (12a, 12b) d'au moins une roue (16c, 16d) extérieure au virage ou intérieure au virage d'au moins l'un des essieux arrière non orientés (11) puissent être actionnés, afin que, lors de manoeuvres en marche arrière, la remorque (8) se déplace en association avec le véhicule tracteur (2) manoeuvré automatiquement suivant la trajectoire de déplacement (37) jusqu'au point de destination (36).

15. Système de commande selon l'une quelconque des revendications 8 à 14, **caractérisé en ce que** l'appareil d'entrée et d'affichage (18) est disposé ou réalisé de manière mobile dans l'habitacle du véhicule tracteur (2, 41) et **en ce que** l'appareil d'entrée et d'affichage (18) est fonctionnellement connecté par l'intermédiaire d'une ligne ou d'une liaison radio (WLAN) à l'électronique de commande et de régulation (7).

16. Système de commande selon l'une quelconque des revendications 12 à 15, **caractérisé en ce que** l'appareil de commande (35) est intégré de manière matérielle dans le système de freinage électronique (33) de la remorque (8, 44), et/ou est mis en oeuvre sous forme logicielle, et **en ce que** le système de freinage électronique (33) de la remorque (8, 44) comporte un système de régulation électronique des freins.

17. Système de commande selon l'une quelconque des revendications 8 à 16, **caractérisé en ce que** l'électronique de régulation et de commande (7) est configurée sous la forme d'une unité centrale de calcul du véhicule tracteur (2, 41) et comporte un système de freinage électronique et est conçue pour calculer la manoeuvre en marche arrière du véhicule attelé (1, 40) une stratégie de manoeuvre pour le véhicule tracteur (1, 40) et une stratégie de freinage pour la remorque (8, 44), et est conçue pour commander le braquage de l'essieu avant orientable (3) du véhicule tracteur (2, 41) et le freinage de roues individuelles (16a, 16b) de l'au moins un essieu avant orienté (9) et/ou de roues individuelles (16c, 16d, 16e, 16f) de l'au moins un essieu arrière non orienté (11, 11a, 11b) de la remorque (8, 44) de manière à ce que le véhicule attelé (1, 40) se déplace automatiquement suivant la trajectoire de déplacement (37) jusqu'au point de destination (36) fourni en entrée.

18. Système de commande selon l'une quelconque des revendications 8 à 17, **caractérisé en ce que** l'appareil d'entrée et d'affichage (18) est réalisé sous la forme d'un téléphone mobile comportant un écran tactile (19), ayant une fonctionnalité de calcul, comportant une fonction de navigation par satellite, comportant un raccordement à un réseau radio local (WLAN).

19. Système de commande selon l'une quelconque des revendications 8 à 17, **caractérisé en ce que** l'appareil d'entrée et d'affichage (18) est réalisé sous la forme d'un calculateur-tablette portable à un écran tactile (19), ayant une fonctionnalité de calculateur, comportant une fonction de navigation par satellite, comportant une liaison internet et comportant un raccordement à un réseau radio local (WLAN).

20. Système de freinage électronique (33) destiné à commander la manoeuvre en marche arrière d'une remorque (8, 44) accouplée de manière articulée à un véhicule tracteur tracteur (2, 41), qui forment ensemble un véhicule attelé (1, 40), dans lequel le véhicule tracteur (2, 41) comporte au moins un essieu avant (3) orientable automatiquement et au moins un essieu arrière non orienté (5),
dans lequel au moins une caméra de recul (27) est en outre disposée à l'arrière (21) de la remorque (8, 44), dans lequel l'électronique de régulation et de commande (7) du véhicule tracteur (2, 41) est fonctionnellement connectée à un appareil d'entrée et d'affichage (18) pouvant être manipulé par un opérateur (38) et comportant un écran (19),
dans lequel la caméra de recul (27) est conçue pour transmettre une image de caméra à l'appareil d'entrée et d'affichage (18),
dans lequel l'appareil d'entrée et d'affichage (18) est conçu pour former l'image de la caméra sur l'écran (19), pour acquérir des données de point de destination pouvant être fournies en entrée par l'opérateur (38) et pour les transmettre à l'électronique de régulation et de commande (7),
dans lequel l'électronique de régulation et de commande (7) est conçue pour calculer, à partir de données de position du véhicule attelé (1, 40) par rapport au point de destination (36) fourni en entrée sur l'appareil d'entrée et d'affichage (18), à partir de données de véhicule déterminées par des capteurs (24, 25, 26, 43, 54), telles l'angle de braquage actuel de l'essieu avant orientable (3) du véhicule tracteur (2, 41), l'angle de pivotement actuel d'une barre d'attelage (13) de la remorque (8) par rapport au véhicule tracteur (2, 41) et/ou l'angle de pivotement actuel de la remorque (8, 44) par rapport au véhicule tracteur (2, 41) et/ou par rapport à la barre d'attelage (13), une trajectoire de déplacement efficace (37) et pour transmettre les informations graphiques correspondantes à l'appareil d'entrée et d'affichage (18),
dans lequel l'appareil d'entrée et d'affichage (18) est conçu pour superposer à la même échelle une image (37a) de la trajectoire de déplacement efficace (37) à l'image de la caméra sur l'écran (19) de manière à ce que l'image de la caméra et l'image (37a) de la trajectoire de déplacement (37a) puissent toutes deux être visibles,
et dans lequel l'électronique de régulation et de commande (7) est conçue pour calculer les ordres de manoeuvre nécessaires pour un actionneur de braquage (23) sur l'essieu avant orientable (3) du véhicule tracteur (2, 41),
et pour exécuter la commande de l'actionneur de braquage (23) de manière à ce que le véhicule attelé (1, 40), lors de manoeuvres en marche arrière, se déplace automatiquement suivant la trajectoire de déplacement (37) jusqu'au point de destination (36) fourni en entrée,
**caractérisé en ce que**
la remorque (8, 44) comporte des roues (16a, 16b, 16c, 16d, 16e, 16f) pouvant être soumises à un freinage unilatéral permettant de la manoeuvrer automatiquement, et
dans lequel le système de freinage électronique (33) de la remorque (8, 44) est connectée directement ou par transmission de signaux par l'intermédiaire d'un appareil (35) à une électronique de régulation et de commande (7) du véhicule tracteur (2, 41) pour la réception d'ordres de freinage de manoeuvre destinés aux roues devant être soumises à un freinage (16a, 16b, 16c, 16d, 16e, 16f) de la remorque (8, 44), et
dans lequel l'électronique de régulation et de commande (7) est conçue pour
- calculer les ordres de freinage de manoeuvre destinés aux freins (10a, 10b, 12a, 12b, 12c, 12d) des roues (16a, 16b, 16c, 16d, 16e, 16f) de la remorque (8, 44), et
- en plus de la commande de l'actionneur de braquage (23), pour exécuter une commande des freins (12a, 12b, 12c, 12d) sur les roues (16a, 16b, 16c, 16d, 16e, 16f) de la remorque (8, 44) de manière à ce que le véhicule attelé (1, 40), lors de manoeuvres en marche arrière, se déplace automatiquement suivant la trajectoire de déplacement (37) jusqu'au point de destination (36) fourni en entrée, et
- pour identifier sur l'écran (19) de l'appareil d'entrée et d'affichage (18) des régions qui se situent au-delà de l'angle de braquage maximal du véhicule attelé (1, 40) et qui ne peuvent donc pas être atteintes à partir de la position actuelle du véhicule attelé (1, 40).

21. Système de freinage (33) selon la revendication 20, **caractérisé en ce que** l'appareil de commande côté remorque (35) présent dans le système de freinage électronique (33) de la remorque (8, 44) est intégré sous forme matérielle ou/et est mis en oeuvre sous forme logicielle, et **en ce que** le système de freinage électronique (33) de la remorque est un système de régulation électronique des freins.
